(19) Europäisches Patentamt

European Patent Office

Office européen des brevets

(11) **EP 4 757 488 A1**

(12) **EUROPEAN PATENT APPLICATION**
published in accordance with Art. 153(4) EPC

(43) Date of publication:
**10.06.2026  Bulletin 2026/24**

(21) Application number: **24867141.4**

(22) Date of filing: **08.08.2024**

(51) International Patent Classification (IPC):
*H04W 76/28* *(2018.01)*

(52) Cooperative Patent Classification (CPC):
**H04L 1/1812; H04W 72/231; H04W 72/232;
H04W 76/28**

(86) International application number:
**PCT/CN2024/110755**

(87) International publication number:
**WO 2025/060724 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023  CN 202311202817**

(71) Applicant: **Datang Mobile Communications
Equipment Co., Ltd.
Beijing 100085 (CN)**

(72) Inventor: **ZHAO, Yali
Beijing 100085 (CN)**

(74) Representative: **Ipsilon
12 Avenue d'Italie
75013 Paris (FR)**

(54) **DRX TIMER MAINTENANCE METHOD, DEVICE AND APPARATUS, AND STORAGE MEDIUM**

(57)  The present application relates to a DRX timer maintenance method, device and apparatus, and a storage medium. The method comprises: if there are a plurality of sets of discontinuous reception (DRX) configurations for a first target object, determining, on the basis of a preset rule, the length of each DRX timer corresponding to a hybrid automatic repeat request (HARQ) process. By means of the method, the maintenance of a DRX timer can be realized.

> if there are multiple sets of DRX configurations for a first target object, determine, based on a preset rule, the length of each DRX timer corresponding to an HARQ process — S102

**FIG. 3**

EP 4 757 488 A1

**Description**

**CROSS-REFERENCE**

The present application claims priority to Chinese Patent Application No. 2023112028172, entitled "DRX TIMER MAINTENANCE METHOD, DEVICE, APPARATUS, AND STORAGE MEDIUM", filed on September 18, 2023, the entire contents of which are incorporated herein by reference.

**BACKGROUND**

A discontinuous reception (DRX) mechanism means that a terminal cyclically turns on a radio frequency channel to monitor a control channel in a period of time, and turns off the radio frequency channel to be in a sleep state in the rest of a cycle, so as to save power of the terminal.

In the prior art, DRX is configured based on the terminal or a cell group of the terminal, that is, only one set of DRX configuration parameters exists on one serving cell. With introduction of emerging services such as XR, multiple sets of DRX may be required to be configured on one serving cell for better power saving performance. In this case, how the terminal maintains DRX-related timers becomes an urgent technical problem to be solved.

**SUMMARY**

In view of the above technical problem, there are provided a discontinuous reception (DRX) timer maintenance method, a device, a DRX timer maintenance apparatus, and a storage medium, which are capable of maintaining DRX timers.

In a first aspect, the present application provides a DRX timer maintenance method, applied to a first device, the method including:

if there are multiple DRX configurations for a first target object, determining, based on a preset rule, a length of each DRX timer corresponding to a hybrid automatic repeat request (HARQ) process.

In an embodiment, the first target object includes at least one of:

  the first device;
  a serving cell:
  a serving frequency point:
  a bandwidth part (BWP);
  a master cell group (MCG);
  a secondary cell group (SCG);
  a BWP set; or
  a serving frequency point set.

In an embodiment, the DRX timer includes at least one of:

  a DRX inactivity timer;
  an HARQ round-trip time timer; or
  an HARQ retransmission timer.

In an embodiment, the preset rule includes at least one of the following:

  the length of each DRX timer is determined based on first configuration information corresponding to a second target object included in the HARQ process, where the second target object includes a data radio bearer (DRB) or a signaling radio bearer (SRB) or a logic channel (LCH);
  the length of each DRX timer corresponding to the HARQ process is determined based on second configuration information corresponding to a resource used for transmission of the HARQ process:
  the length of each DRX timer corresponding to the HARQ process is determined based on third configuration information carried in a scheduling signaling; or
  the length of each DRX timer corresponding to the HARQ process is determined based on fourth configuration information corresponding to a process number of the HARQ process.

In an embodiment, at least one of the first configuration information, the second configuration information, the third configuration information, or the fourth configuration information includes one or more of:

a DRX configuration parameter; and
a DRX configuration number.

The DRX configuration parameter includes all of or a part of parameters corresponding to a DRX configuration.
In an embodiment, the part of DRX configuration parameters include at least one of:

a length of the DRX inactivity timer;
a length of the HARQ round-trip time timer; or
a length of the HARQ retransmission timer.

In an embodiment, the method further includes at least one of:

receiving at least one of the following contents sent by a network device through a dedicated signaling: the first configuration information, the second configuration information, or the fourth configuration information;
receiving at least one of the following contents sent by the network device through a system information block: the first configuration information, the second configuration information, or the fourth configuration information: or
acquiring at least one of the following contents from pre-configured information: the first configuration formation, the second configuration information, or the fourth configuration information.

In an embodiment, the first configuration information is carried in a mapping restriction parameter corresponding to the second target object.
In an embodiment, the method further includes any one of:

allowing second target objects with the same first configuration information to be multiplexed into one media access control (MAC) packet data unit (PDU) corresponding to the HARQ process; and
allowing second target objects with different first configuration information to be multiplexed into one MAC PDU corresponding to the HARQ process.

In an embodiment, if the second target objects with different first configuration information are allowed to be multiplexed into one MAC PDU corresponding to the HARQ process, and the length of each DRX timer is determined based on the first configuration information corresponding to the second target object comprised in the HARQ process, a determining manner of the first configuration information includes any one of:

the first configuration information corresponding to the second target object with a highest priority in the MAC PDU corresponding to the HARQ process;
the first configuration information corresponding to the second target object with a lowest priority in the MAC PDU corresponding to the HARQ process;
the first configuration information corresponding to a specified second target object in the MAC PDU corresponding to the HARQ process; and
determining the first configuration information corresponding to each second target object in the MAC PDU corresponding to the HARQ process, and determining the first configuration information based on a number of second target objects configured with the same first configuration information.

In an embodiment, the method further includes:
if the resource is a pre-configured resource, carrying the second configuration information in configuration information or a pre-configured resource activation signaling corresponding to the pre-configured resource.
In an embodiment, the method further includes:

determining a DRX active time of the resource used for the transmission of the HARQ process; and
determining the second configuration information according to the DRX configuration parameter to which the DRX active time belongs.

In an embodiment, determining the second configuration information according to the DRX configuration parameter to which the DRX active time belongs includes:

if the DRX active time is an intersection of active times of multiple DRX configurations corresponding to the resource, determining the second configuration information by adopting any one of the following manners:
determining the second configuration information according to one DRX configuration randomly selected from the multiple DRX configurations; and
sorting the multiple DRX configurations, and determining the second configuration information according to a first DRX configuration after sorting.

In an embodiment, the scheduling signaling includes downlink control information (DCI) and/or sidelink control information (SCI).

In an embodiment, the first device is a network device, and the method further includes:
configuring the fourth configuration information independently based on each HARQ process number or configuring the fourth configuration information based on a set of HARQ process numbers.

In an embodiment, the first device is a sending terminal, and the method further includes:
selecting a second target object that is allowed to use an uplink grant according to a first condition, where the first condition at least includes the following content: the first configuration information corresponding to the second target object includes a DRX configuration parameter or a DRX configuration number corresponding to the uplink grant.

In an embodiment, the first device is a sending terminal, and the method further includes:

selecting a second target object and/or an MAC control element (CE) that is allowed to use a sidelink grant according to a second condition, and selecting a layer two (L2) address corresponding to the second target object and/or the MAC CE with a highest priority as a target L2 address according to a priority of the second target object and/or a priority of the MAC CE;

where the second condition at least includes the following content: the first configuration information corresponding to the second target object includes a DRX configuration parameter or a DRX configuration number corresponding to the sidelink grant.

In an embodiment, the method further includes:

selecting a second target object satisfying a third condition for the target L2 address:
where the third condition at least includes the following content: the second target object belongs to the target L2 address, and the first configuration information corresponding to the second target object includes the DRX configuration parameter or the DRX configuration number corresponding to the sidelink grant.

In an embodiment, the method further includes:

sending auxiliary information to the network device, the auxiliary information being configured for instructing the network device to configure multiple DRX configurations for the sending terminal;
where the auxiliary information includes at least one of:
an arrival time of a third target object;
a cycle of the third target object;
jitter of the third target object; or
a data transmission end time of the third target object.

In an embodiment, the third target object includes at least one of:

a quality of service (QoS) flow;
a data burst;
a PDU set; or
a PDU.

In an embodiment, the first device is the network device, and the method further includes at least one of:

determining at least one of: the first configuration information, the second configuration information, the third configuration information, or the fourth configuration information; or
acquiring at least one of the following contents from pre-configured information: the first configuration information, the second configuration information, the third configuration information, aor the fourth configuration information.

In a second aspect, the present application further provides a device, including:

a memory for storing a computer program; a transceiver for transceiving data under control of a processor; and the processor for reading the computer program in the memory and performing the following operation:

if there are multiple DRX configurations for a first target object, determining, based on a preset rule, a length of each DRX timer corresponding to an HARQ process.

In an embodiment, the first target object includes at least one of:

a first device;
a serving cell:
a serving frequency point:
a bandwidth part (BWP);
a master cell group (MCG);
a secondary cell group (SCG):
a BWP set; or
a serving frequency point set.

In an embodiment, the DRX timer includes at least one of:

a DRX inactivity timer:
an HARQ round-trip time timer; or
an HARQ retransmission timer.

In an embodiment, the preset rule includes at least one of the following rules:

the length of each DRX timer is determined based on first configuration information corresponding to a second target object included in the HARQ process, where the second target object includes a data radio bearer (DRB) or a signaling radio bearer (SRB) or a logic channel (LCH);
the length of each DRX timer corresponding to the HARQ process is determined based on second configuration information corresponding to a resource used for transmission of the HARQ process:
the length of each DRX timer corresponding to the HARQ process is determined based on third configuration information carried in a scheduling signaling; or
the length of each DRX timer corresponding to the HARQ process is determined based on fourth configuration information corresponding to a process number of the HARQ process.

In an embodiment, at least one of the first configuration information, the second configuration information, the third configuration information, or the fourth configuration information includes one or more of:

a DRX configuration parameter; and
a DRX configuration number.

The DRX configuration parameter includes all of or a part of parameters corresponding to the DRX configuration.
In an embodiment, the part of DRX configuration parameters include at least one of:

a length of the DRX inactivity timer;
a length of the HARQ round-trip time timer; or
a length of the HARQ retransmission timer.

In an embodiment,

the transceiver is configured to receive at least one of the following contents sent by a network device through a dedicated signaling: the first configuration information, the second configuration information, or the fourth configuration information;
the transceiver is further configured to receive at least one of the following contents sent by the network device through a system information block: the first configuration information, the second configuration information, or the fourth configuration information; and
the processor is further configured to acquire at least one of the following contents from pre-configured information: the first configuration information, the second configuration information, or the fourth configuration information.

In an embodiment, the first configuration information is carried in a mapping restriction parameter corresponding to the second target object.

In an embodiment, the processor is further configured to perform at least one of the following operations:

allowing second target objects with same first configuration information to be multiplexed into one MAC PDU corresponding to the HARQ process; or
allowing second target objects with different first configuration information to be multiplexed into one MAC PDU corresponding to the HARQ process.

In an embodiment, if the second target objects with different first configuration information are allowed to be multiplexed into one MAC PDU corresponding to the HARQ process, and the length of each DRX timer is determined based on the first configuration information corresponding to the second target object comprised in the HARQ process, a determining manner of the first configuration information includes any one of:

the first configuration information corresponding to the second target object with a highest priority in the MAC PDU corresponding to the HARQ process:
the first configuration information corresponding to the second target object with a lowest priority in the MAC PDU corresponding to the HARQ process:
the first configuration information corresponding to a specified second target object in the MAC PDU corresponding to the HARQ process: and
determining the first configuration information corresponding to each second target object in the MAC PDU corresponding to the HARQ process, and determining the first configuration information based on a number of second target objects configured with the same first configuration information.

In an embodiment,
the processor is further configured to, if the resource is a pre-configured resource, carry the second configuration information in configuration information or a pre-configured resource activation signaling corresponding to the pre-configured resource.
In an embodiment,
the processor is further configured to determine a DRX active time of the resource used for the transmission of the HARQ process, and determine the second configuration information according to a DRX configuration parameter to which the DRX active time belongs.
In an embodiment,

the processor is further configured to, if the DRX active time is an intersection of active times of multiple DRX configurations corresponding to the resource, determine the second configuration information by adopting any one of the following manners:
determining the second configuration information according to one DRX configuration randomly selected from the multiple DRX configurations; and
sorting the multiple DRX configurations, and determining the second configuration information according to a first DRX configuration after sorting.

In an embodiment, the scheduling signaling includes downlink control information (DCI) and/or sidelink control information (SCI).
In an embodiment, the device is the network device, and
the processor is further configured to configure the fourth configuration information independently based on each HARQ process number or configure the fourth configuration information based on a set of HARQ process numbers.
In an embodiment, the device is a sending terminal, and
the processor is further configured to select a second target object that is allowed to use an uplink grant according to a first condition, where the first condition at least includes the following content: the first configuration information corresponding to the second target object includes a DRX configuration parameter or a DRX configuration number corresponding to the uplink grant.
In an embodiment, the device is the sending terminal, and
the processor is further configured to select a second target object and/or an MAC CE that is allowed to use a sidelink grant according to a second condition, and select a layer two (L2) address corresponding to the second target object and/or the MAC CE with a highest priority as a target L2 address according to a priority of the second target object and/or a priority of the MAC CE.
The second condition at least includes the following content: the first configuration information corresponding to the second target object includes a DRX configuration parameter or a DRX configuration number corresponding to the sidelink grant.

In an embodiment,
the processor is further configured to select a second target object satisfying a third condition for the target L2 address; where the third condition at least includes the following content: the second target object belongs to the target L2 address, and the first configuration information corresponding to the second target object includes the DRX configuration parameter or the DRX configuration number corresponding to the sidelink grant.

In an embodiment,
the processor is further configured to send auxiliary information to the network device, the auxiliary information being configured for instructing the network device to configure multiple DRX configurations for the sending terminal.

The auxiliary information includes at least one of:

an arrival time of a third target object;
a cycle of the third target object;
jitter of the third target object; aor
a data transmission end time of the third target object.

In an embodiment, the third target object includes at least one of:

a QoS flow;
a data burst;
a PDU set; or
a PDU.

In an embodiment, the device is the network device,

the processor is further configured to determine at least one of: the first configuration information, the second configuration information, the third configuration information, or the fourth configuration information; and
the processor is further configured to acquire at least one of the following contents from pre-configured information: the first configuration information, the second configuration information, the third configuration information, or the fourth configuration information.

In a third aspect, the present application further provides a DRX timer maintenance apparatus, including:
a determining unit, which is configured to determine, if there are multiple DRX configurations for a first target object, a length of each DRX timer corresponding to an HARQ process based on a preset rule.

Optionally, the first target object includes at least one of:

a first device;
a serving cell;
a serving frequency point;
a bandwidth part (BWP);
a master cell group (MCG);
a secondary cell group (SCG);
a BWP set; or
a serving frequency point set.

Optionally, the DRX timer includes at least one of:

a DRX inactivity timer;
an HARQ round-trip time timer; or
an HARQ retransmission timer.

In an embodiment, the preset rule includes at least one of the following rules:

the length of each DRX timer is determined based on first configuration information corresponding to a second target object included in the HARQ process, where the second target object includes a data radio bearer (DRB) or a signaling radio bearer (SRB) or a logic channel (LCH);
the length of each DRX timer corresponding to the HARQ process is determined based on second configuration information corresponding to a resource used for transmission of the HARQ process;
the length of each DRX timer corresponding to the HARQ process is determined based on third configuration information carried in a scheduling signaling; or
the length of each DRX timer corresponding to the HARQ process is determined based on fourth configuration information corresponding to a process number of the HARQ process.

Optionally, the scheduling signaling includes downlink control information (DCI) and/or sidelink control information (SCI).

Optionally, the first device is a network device, and the apparatus may further include:
a first information configuring unit, configured to configure the fourth configuration information independently based on each HARQ process number or configure the fourth configuration information based on a set of ARQ process numbers.

In an embodiment, at least one of the first configuration information, the second configuration information, the third configuration information, or the fourth configuration information includes one or more of:

a DRX configuration parameter: and
a DRX configuration number.

The DRX configuration parameter includes all of or a part of parameters corresponding to the DRX configuration.

Optionally, the part of DRX configuration parameters include at least one of:

a length of the DRX inactivity timer;
a length of the HARQ round-trip time timer: or
a length of the HARQ retransmission timer.

In an embodiment, the apparatus may further include at least one of:

a first receiving unit, configured to receive at least one of the following contents sent by a network device through a dedicated signaling: the first configuration information, the second configuration information, or the fourth configuration information:
a second receiving unit, configured to receive at least one of the following contents sent by the network device through a system information block: the first configuration information, the second configuration information, or the fourth configuration information; or
a first acquiring unit, configured to acquire at least one of the following contents from pre-configured information: the first configuration information, the second configuration information, or the fourth configuration information.

In an embodiment, the first configuration information is carried in a mapping restriction parameter corresponding to the second target object.

In an embodiment, the apparatus may further include at least one of:

a first multiplexing unit, configured to allow second target objects with same first configuration information to be multiplexed into one MAC PDU corresponding to the HARQ process; or
a second multiplexing unit, configured to allow second target objects with different first configuration information to be multiplexed into one MAC PDU corresponding to the HARQ process.

Optionally, if the second target objects with different first configuration information are allowed to be multiplexed into one MAC PDU corresponding to the HARQ process, and the length of each DRX timer is determined based on the first configuration information corresponding to the second target object included in the HARQ process, a determining manner of the first configuration information includes any one of:

the first configuration information corresponding to the second target object with a highest priority in the MAC PDU corresponding to the HARQ process:
the first configuration information corresponding to the second target object with a lowest priority in the MAC PDU corresponding to the HARQ process:
the first configuration information corresponding to a specified second target object in the MAC PDU corresponding to the HARQ process; and
determining the first configuration information corresponding to each second target object in the MAC PDU corresponding to the HARQ process, and determining the first configuration information based on a number of second target objects configured with the same first configuration information.

In an embodiment, the apparatus may further include:

a second information configuring unit, which is configured to carry, if the resource is a pre-configured resource, the second configuration information in configuration information or a pre-configured resource activation signaling corresponding to the pre-configured resource.

In an embodiment, the apparatus may further include:

an active time determining unit, configured to determine a DRX active time of the resource used for the transmission of the HARQ process: and
a first information determining unit, configured to determine the second configuration information according to the DRX configuration parameter to which the DRX active time belongs.

Optionally, if the DRX active time is an intersection of active times of multiple DRX configurations corresponding to the resource, the first information determining unit is further configured to determine the second configuration information by adopting any one of the following manners:

determining the second configuration information according to one DRX configuration randomly selected from the multiple DRX configurations; and
sorting the multiple DRX configurations, and determining the second configuration information according to a first DRX configuration after sorting.

In an embodiment, the first device is a sending terminal, and the apparatus may further include:
a second target object determining unit, configured to select a second target object that is allowed to use an uplink grant according to a first condition, where the first condition at least includes the following content: the first configuration information corresponding to the second target object includes a DRX configuration parameter or a DRX configuration number corresponding to the uplink grant.

In an embodiment, the first device is a sending terminal, and the apparatus may further include:
an address selecting unit, configured to select a second target object and/or an MAC control element (CE) that is allowed to use a sidelink grant according to a second condition, and select a layer two (L2) address corresponding to the second target object and/or the MAC CE with a highest priority as a target L2 address according to a priority of the second target object and/or a priority of the MAC CE.

The second condition at least includes the following content: the first configuration information corresponding to the second target object includes a DRX configuration parameter or a DRX configuration number corresponding to the sidelink grant.

Optionally, the apparatus may further include:

an object selecting unit, configured to select a second target object satisfying a third condition for the target L2 address;
where the third condition at least includes the following content: the second target object belongs to the target L2 address, and the first configuration information corresponding to the second target object includes the DRX configuration parameter or the DRX configuration number corresponding to the sidelink grant.

In an embodiment, the first device is the sending terminal, and the apparatus may further include:

a sending unit, configured to send auxiliary information to the network device, the auxiliary information being configured for instructing the network device to configure multiple DRX configurations for the sending terminal;
where the auxiliary information includes at least one of:
an arrival time of a third target object;
a cycle of the third target object;
jitter of the third target object; or
a data transmission end time of the third target object.

Optionally, the third target object includes at least one of:

a QoS flow;
a data burst;
a PDU set; or
a PDU.

In an embodiment, the first device is the network device, and the apparatus may further include at least one of:

a second information determining unit, configured to determine at least one of: the first configuration information, the second configuration information, the third configuration information, or the fourth configuration information; or

a second acquiring unit, configured to acquire at least one of the following contents from pre-configured information: the first configuration information, the second configuration information, the third configuration information, or the fourth configuration information.

In a fourth aspect, the present application further provides a processor-readable storage medium storing a program for causing a processor to perform the steps of the method in the first aspect.

In a fifth aspect, the present application further provides a computer program product including a computer program which, when executed by a processor, implements the steps of the method in the first aspect.

According to the DRX timer maintenance method, the device, the DRX timer maintenance apparatus, and the storage medium, under the condition that there are multiple sets of DRX configurations for the first target object, the unique length of each DRX timer corresponding to the HARQ process can be determined based on the preset rule, so that each corresponding DRX timer can be maintained more accurately based on the determined unique length, and the DRX timers can be ensured to work normally. Based on this, the present application provides XX.

## BRIEF DESCRIPTION OF THE DRAWINGS

Various other advantages and merits will become apparent to those skilled in the art by reading through the following detailed description of embodiments. Figures are only intended to illustrate embodiments and not construed as limiting the present application. In all figures, like reference numerals denote like parts. In the drawings:

FIG. 1 is an architecture diagram of a traditional cellular network communication system;
FIG. 2 is a basic principle diagram of a DRX mechanism;
FIG. 3 is a schematic flow chart of a DRX timer maintenance method according to an embodiment;
FIG. 4 is another schematic flow chart of a DRX timer maintenance method according to an embodiment;
FIG. 5 is a structural block diagram of a terminal according to an embodiment;
FIG. 6 is a structural block diagram of a network device according to an embodiment; and
FIG. 7 is a structural block diagram of a DRX timer maintenance apparatus according to an embodiment.

## DETAILED DESCRIPTION OF EMBODIMENTS

The present application is described in further detail below with reference to the accompanying drawings and embodiments in order to make the objects, technical solutions, and advantages of the present application more clear. It should be understood that the specific embodiments described herein are only for explaining the present application, and are not intended to limit the present application.

In the embodiments of the present invention, the term "and/or" describes an association relationship between associated objects, and indicates that three relationships may exist. For example, A and/or B may indicate three cases: only A exists; both A and B exist: and only B exists. The symbol "/" generally indicates that associated objects have a relationship of "or".

The term "multiple sets" in the embodiments of the present application means two or more sets. Other measure words used in combination with "multiple" also can be understood similarly.

The technical solutions in the embodiments of the present application are clearly and completely described with reference to the accompanying drawings in the embodiments of the present application. Apparently, the described embodiments are not all but only a part of the embodiments of the present application. All other embodiments obtained by a person of ordinary skill in the art based on the embodiments of the present application without creative efforts shall fall within the protection scope of the present application.

First of all, the technical background of the present application is explained below.

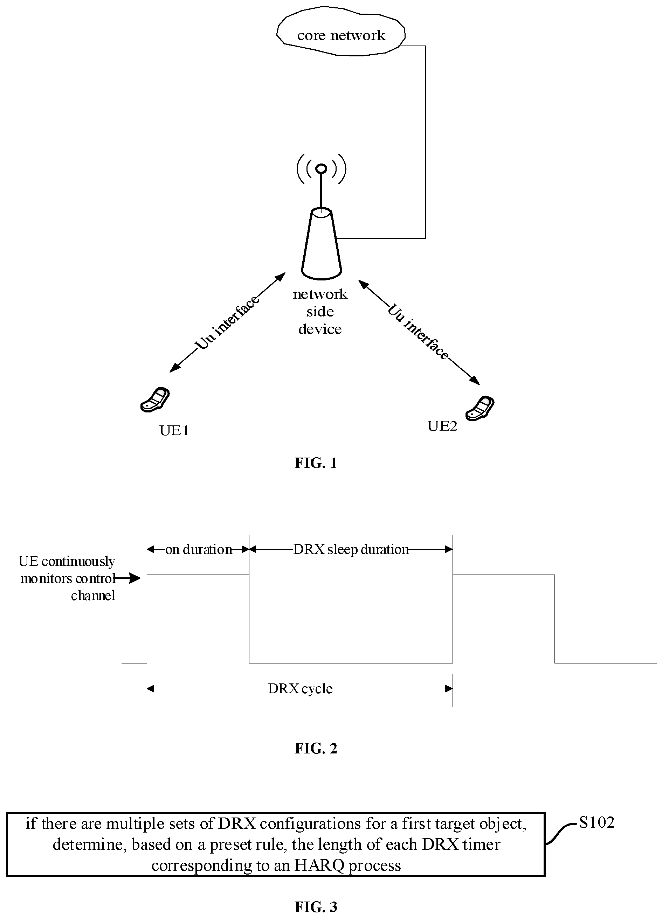

In a traditional cellular network communication system, referring to a communication architecture diagram shown in FIG. 1, uplink and downlink data and control information are generally transmitted between a terminal and a network side device through a Uu interface.

In a mobile communication system based on shared channels, transmission of the uplink and downlink data is controlled by a base station scheduler, and when the scheduler determines to perform scheduling for a user, the scheduler notifies, through a control channel, the terminal of a resource on which the data is sent or received. The terminal (UE) monitors the control channel, and in response to detecting that there includes scheduling information of the terminal on the control channel, the terminal can complete sending (i.e., uplink transmission) or reception (i.e., downlink transmission) of the data according to an indication on the control channel. In an activated state, since the terminal does not know when a base station will perform the scheduling for it, a common working mode is as follows: the terminal continuously monitors the control channel, and analyzes each subframe containing a downlink scheduling control channel to determine whether the terminal itself is scheduled or not. The working mode can achieve a relatively high efficiency under the condition that the terminal has a relatively large data volume and is possibly scheduled frequently. However, for some services, a frequency of arrival of data is relatively low, which results in a relatively small number of times of scheduling of the terminal, and in this case, if the terminal still continuously monitors the control channel, power consumption of the terminal is definitely increased. Therefore, in order to solve the problem about power consumption, the cellular network communication system adopts a discontinuous reception (DRX) working mode. In this working mode, the terminal cyclically monitors the control channel, thereby saving the power.

The following gives description on contents related to the DRX mechanism:

1. DRX basic principle

FIG. 2 illustrates the DRX basic principle. On duration represents a time period during which the UE monitors the control channel, and during the on duration, a radio frequency channel is turned on and the UE continuously monitors the control channel (that is, the UE shall monitor the PDCCH). At times other than the on duration, the UE is in a sleep state (denoted as DRX sleep duration, i.e., opportunity for DRX), and during the DRX sleep duration, the radio link is turned off and the UE does not monitor the control channel, so as to save power. Occurrence of the on duration is cyclical (that is, on durations occur according to DRX cycles), and the specific cycle is configured by the base station, eNB.

In addition, the DRX mechanism of the cellular network communication system takes into account an arrival model of data services, that is, arrival of data packets is bursty (it can mean that once one data packet arrives, more packets may continuously arrive in a short time). In order to adapt to the service arrival characteristic, multiple timers are adopted in an LTE DRX process, combined with a hybrid automatic repeat request (HARQ) process, to achieve a better power saving performance.

The above-described DRX mechanism is generally implemented with the usage of the timers, and the multiple DRX timers involved are described below.

2. DRX related timers

DRX on duration timer: this timer represents a duration when the UE cyclically wakes up to monitor the control channel, as shown in FIG. 2.

Short DRX cycle timer: for this timer, in order to better adapt to the data service arrival characteristic, the cellular network communication system supports the configuration of two DRX cycles: a long cycle and a short cycle. On durations of the two cycles are the same, but sleep durations thereof are different. In the short cycle, the sleep duration is relatively shorter, and the UE can monitor the control channel again faster. Configuration of the long cycle is mandatory and the long cycle is an initial state of the DRX process, and configuration of the short cycle is optional. The short DRX cycle timer sets a duration in which the short cycle is used. After the short cycle timer times out, the UE uses a long cycle timer.

DRX inactivity timer: for the timer, after DRX is configured, the timer is turned on when the UE receives control signaling for an HARQ initial transmission within a time in which monitoring of the control channel is allowed (i.e., active time), and the UE continuously monitors the control channel before the timer times out. If the UE receives the control signaling for the HARQ initial transmission before the DRX inactivity timer times out, the DRX inactivity timer is terminated and restarted.

HARQ round-trip time (RTT) timer: the timer includes DRX-HARQ-RTT-timer DL and DRX-HARQ-RTT-timer UL, and aims to enable the UE not to monitor the control channel before a next retransmission arrives, so as to achieve a better power saving performance. With the downlink as an example, the timer is turned on when a first symbol after a physical downlink control channel (PUCCH) transmission of a UE-related process starts. If data in the corresponding HARQ process is not successfully decoded after a previous HARQ transmission (for example, the UE feeds NACK back), the UE turns on DRX retransmission timer DL after the downlink HARQ RTT timer times out. If the data in the corresponding HARQ process is successfully decoded after the previous HARQ transmission (for example, the UE feeds ACK back), the UE does not start the DRX retransmission timer DL after the DRX-HARQ-RTT-timer DL times out. In a case that only the DRX-HARQ-RTT-timer DL runs currently, the UE does not monitor the control channel.

HARQ retransmission timer: the timer includes DRX-retransmission timer DL and DRX-retransmission timer UL. With the downlink as an example, when the DL HARQ retransmission timer runs, the UE monitors the control channel and waits for retransmission scheduling of the corresponding HARQ process.

The following describes calculation of the on duration of the DRX timer in a common case.

3. On duration calculation under common DRX

For the short DRX cycle, an on duration calculation formula is shown in equation (1) below:

$$[(SFN) * 10 + Subframe\ number]\ modulo(short\ DRX\ Cycle)$$
$$= (drxStartOffset)\ modulo(short\ DRX\ Cycle) \qquad (1)$$

For the long DRX cycle, an on duration calculation formula is shown in equation (2) below:

$$[(SFN) * 10 + Subframe\ number]\ mod\ ulo(long\ DRX\ Cycle) = drxStartOffset \qquad (2)$$

Meanings of parameters in the equations (1) and (2) are explained below:

SFN: system frame number (SFN) of current radio frame;
Subframe number: serial number of current subframe;
short DRX Cycle: short DRX cycle;
long DRX Cycle: long DRX cycle;
drxStartOffset: offset value configured through radio resource control (RRC) signaling; and
Modulo: modulo operation.

As can be seen from the above description, by configuring the DRX mechanism for a device, the purpose of saving power can be achieved. Generally, for the traditional cellular network communication system, a general DRX configuration is configured based on a cell group (CG), that is, only one DRX configuration is used by all cells within one CG.

Currently, as most important 5G media applications, extended reality (XR) and cloud game (CG) have requirements on low latency, high throughput and high reliability, and require transmission of a large amount of data in a short time. The XR is a generic term for different types of reality, and refers to all real and virtual combined environments and human-machine interactions produced by computer technologies and devices, and representational forms thereof include augmented reality (AR), mixed reality (MR), and virtual reality (VR).

However, with introduction of services such as the XR and the CG. in order to better meet latency requirement of the services, the situation that multiple DRX configurations are configured for one serving cell may be introduced, and how to maintain the configured multiple DRX configurations becomes a technical problem to be solved urgently. Based on this, DRX timer maintenance method and apparatus, a device, and a storage medium are provided in the embodiments, which can solve the above technical problem.

An application scenario of the embodiments of the present application is explained below.

The technical solution provided by the embodiments of the application can be applied to various systems. For example, it is applicable to systems such as long term evolution (LTE) systems, LTE frequency division duplex (FDD) systems, LTE time division duplex (TDD) systems, long term evolution advanced (LTE-A) systems, universal mobile telecommunication systems (UMTS), worldwide interoperability for microwave access (WiMAX) systems, and 5G new radio (NR) systems and evolution communication systems thereof. Each of these systems may include a terminal device and a network device. The system may further include a core network part such as an evolved packet system (EPS) and a 5G System (5GS).

The terminal device in the above system may include a sending terminal and a receiving terminal. The sending terminal is mainly configured to send data to the network device, and the receiving terminal is mainly configured to receive data sent by the network device and/or the sending terminal.

In the following embodiments, the DRX timer maintenance method according to the embodiments of the present application is described with any one from the receiving terminal, the sending terminal, and the network device in the application scenario as an execution body.

In an embodiment, it is provided a DRX timer maintenance method, which is applied to a first device. As shown in FIG. 3, the method may include the following step:

S102 includes: if there are multiple DRX configurations for a first target object, determining, based on a preset rule, a length of each DRX timer corresponding to an HARQ process.

In the embodiment, the first target object may be the first device or an object related to the first device. Optionally, the first target object may include at least one of: the first device, a serving cell, a serving frequency point, a bandwidth part (BWP), a master cell group (MCG), a secondary cell group (SCG), a BWP set, or a serving frequency point set.

The first device may be a terminal or a network device, and the terminal may be a receiving terminal or a sending terminal. The terminal may be, but is not limited to, various personal computers, notebook computers, smart phones, tablet computers, Internet of Things devices and portable wearable devices. The Internet of Things devices may be smart speakers, smart televisions, smart air conditioners, smart vehicle-mounted devices, etc. The portable wearable devices can be smart watches, smart bracelets, head-mounted devices, etc. The network device may be a base station, a wireless access point, or other Internet of Things devices.

The serving cell may be a cell providing a service for the terminal, and it may be a primary cell (PCell) of the terminal, and may alternatively be a secondary cell (SCell) of the terminal. The serving frequency point is a frequency point which can provide a service for the terminal, such as a frequency point where the primary cell is located and/or a frequency point where the secondary cell is located. A cell group may be the master cell group (MCG) or the secondary cell group (SCG). The master cell group may be a cell group to which the primary cell belongs. The secondary cell group may be a cell group including only the secondary cell. In addition to the master cell group and the secondary cell group, other cell groups may be included in the embodiment. The BWP set may include one BWP or multiple BWPs, If multiple BWPs are included, frequency points and/or bandwidths of the respective BWPs may be the same or different. The serving frequency point set may include one serving frequency point or multiple serving frequency points, and the serving frequency point may be a frequency point providing a data transmission service for the terminal.

For the multiple DRX configurations, each DRX configuration may include a group of DRX timers and a configuration parameter corresponding to each DRX timer, and may further include other parameter(s). The group of DRX timers may include at least a DRX inactivity timer, an HARQ RTT timer, and an HARQ retransmission timer. The configuration parameter corresponding to each DRX timer may include a length of the DRX timer, or may alternatively include a parameter or the like that can represent or determine the length of the DRX timer; certainly, other DRX timer related parameters may be included, such as a starting moment, an ending moment, a DRX offset, and a length of an on duration timer.

In addition, the configuration parameters of the same timer in the respective DRX configurations may be the same or different, but different DRX configurations differ in at least one configuration parameter.

Specifically, in a case that the first target object has multiple DRX configurations, one unique DRX configuration or one unique length of each DRX timer needs to be determined, so that the DRX runs normally.

The first device may determine the length of each DRX timer corresponding to the HARQ process based on the preset rule. The preset rule is mainly configured for assisting the first device in determining the unique DRX configuration from the multiple DRX configurations, and then determining the length of each DRX timer, or in directly determining the unique length of each DRX timer from the multiple DRX configurations.

The length of each DRX timer corresponding to the HARQ process, which is determined by the first device based on the preset rule, may be selected by the first device through some rules of the first device, or may be determined based on a rule determined after the first device interacts with a network, or may be determined in any other manner, which is not specifically limited herein. For example, the preset rule may be configured in the first device in advance, or may be configured to the first device by the network. Optionally, the preset rule may be determined based on relevant information of the HARQ process, for example, determined based on a transmission resource used in the HARQ process, determined based on a logical channel corresponding to the HARQ process, or determined based on a process identifier of the HARQ process, or the like. Optionally, the preset rule may alternatively be determined based on signaling sent by the network device, for example, determined based on DCI signaling, RRC signaling, or the like, sent by the network device. In short, the first device only needs to determine the unique length of each DRX timer corresponding to the HARQ process, which can ensure that the DRX can run normally.

According to the DRX timer maintenance method, under the condition that there are multiple DRX configurations for the first target object, the unique length of each DRX timer corresponding to the HARQ process can be determined according to the preset rule, so that the corresponding DRX timer can be maintained more accurately according to the determined unique length, and the DRX timers can be ensured to work normally.

The following embodiments describe types of the DRX timers in the embodiments of the present application. On the basis of the above embodiment, a DRX timer in another embodiment includes at least one of:

a DRX inactivity timer;
an HARQ round-trip time timer; or
an HARQ retransmission timer.

The DRX inactivity timer may be recorded as DRX Inactivity Timer. The HARQ round-trip time timer may be recorded as HARQ RTT timer. The HARQ retransmission timer may be recorded as HARQ retransmission Timer.

During determination of the length of each DRX timer corresponding to the HARQ process, the lengths of the DRX timers may be determined based on the same preset rule, or may be respectively determined based on different preset rules. In addition, different HARQ processes may have same DRX timers or different DRX timers.

In the embodiment, the DRX timer includes at least one of the DRX inactivity timer, the HARQ round-trip time timer, or the HARQ retransmission timer, and by using the solution of the present application, the unique length of one or more DRX timers corresponding to the HARQ process can be determined based on the preset rule, so that maintenance for multiple different timers can be implemented.

The following embodiment describes the preset rule in the embodiments of the present application. The preset rule includes at least one of the following:

preset rule 1: the length of each DRX timer is detennined based on first configuration information corresponding to a second target object included in the HARQ process, where the second target object includes a data radio bearer (DRB) or a signaling radio bearer (SRB) or a logic channel (LCH):

preset rule 2: the length of each DRX timer corresponding to the HARQ process is determined based on second configuration information corresponding to a resource used for transmission of the HARQ process;

preset rule 3: the length of each DRX timer corresponding to the HARQ process is determined based on third configuration information carried in a scheduling signaling; or

preset rule 4: the length of each DRX timer corresponding to the HARQ process is determined based on fourth configuration information corresponding to a process number of the HARQ process.

Each of the first configuration information, the second configuration information, the third configuration information, and the fourth configuration information may directly include the length of each DRX timer, or may include a parameter or the like that can represent or determine the length of each DRX timer; certainly, other DRX timer related parameters may be further included.

Each preset rule is briefly described below.

For the preset rule 1, the length of each DRX timer is determined based on the first configuration information corresponding to the second target object included in the HARQ process. Here, the DRB, SRB, or LCH included in the HARQ process may be obtained first, the DRB, SRB, or LCH has the corresponding first configuration information; and then, the length of each DRX timer can be determined through the first configuration information of the DRB, SRB, or LCH included in the HARQ process.

For the preset rule 2, the length of each DRX timer corresponding to the HARQ process is determined based on the second configuration information corresponding to the resource used for transmission of the HARQ process. The resource may be a resource that can be used during the transmission of the HARQ process, or may be a pre-configured resource for the HARQ process (i.e., a resource configured for the HARQ process in advance, for example, a resource configured via a pre-configured grant and taking effect periodically), and certainly may alternatively be any other type of resource. Here, the resource used for the transmission of the HARQ process has the corresponding second configuration information, and for the HARQ process, the length of each DRX timer can be determined based on the second configuration information.

For the preset rule 3, the length of each DRX timer corresponding to the HARQ process is determined based on the third configuration information carried in the scheduling signaling. The scheduling signaling may be a scheduling signaling sent by the network device to the terminal, or a scheduling signaling sent by any other device to the terminal. The scheduling signaling may be sent to the terminal through a Uu interface, or may be sent to the terminal through a PC5 (proximity communication) interface or a sidelink (SL) interface. The scheduling signaling carries the third configuration information. The terminal can analyze the third configuration information from the scheduling signaling after obtaining the scheduling signaling, and can further determine the length of each DRX timer based on the third configuration information. In an optional embodiment, the scheduling signaling includes downlink control information (DCI) and/or sidelink control information (SCI).

For the preset rule 4, the length of each DRX timer corresponding to the HARQ process is determined based on the fourth configuration information corresponding to the process number of the HARQ process. Here, there may be the corresponding fourth configuration information for each HARQ process, and then, the length of each DRX timer corresponding to the corresponding HARQ process is determined through the fourth configuration information.

In addition, in an example that the first device is a network device, as an optional manner, the fourth configuration information may be configured independently based on each HARQ process number or may be configured based on a set of HARQ process numbers. That is, if there are multiple HARQ processes, the network device may configure the corresponding fourth configuration information for each HARQ process based on the process number of each HARQ process: or the network device may configure the fourth configuration information based on one set of HARQ process numbers.

Regarding the rule 1 to the rule 4, the lengths of all the DRX timers may be determined using the same rule, or the lengths of the DRX timers may be respectively determined using different rules, or the lengths of some DRX timers may be determined using the same rule while the lengths of the other DRX timers may be determined using other rules.

In the embodiment, various different rules are set to determine the lengths of the DRX timers, so that various scenarios needing the DRX timers can be flexibly handled, and the DRX timers can be efficiently maintained.

The following embodiment describes contents included in each of the first configuration information, the second configuration information, the third configuration information, and the fourth configuration information. On the basis of the above embodiment, in another embodiment, at least one of the first configuration information, the second configuration information, the third configuration information, or the fourth configuration information includes one or more of the following:

a DRX configuration parameter; and
a DRX configuration number.

The DRX configuration parameter may include all or a part of parameters corresponding to a DRX configuration.
The DRX configuration number is an index value of the DRX configuration. That is, there may be unique indexes respectively for different DRX configurations. For example, there are 4 DRX configurations for one serving cell of the terminal, each DRX configuration corresponds to one number, and specific numbers of the DRX configurations may be 0, 1, 2, and 3 respectively. The DRX configuration parameter in the corresponding relationship may be all or a part of DRX configuration parameters.
In addition, the first configuration information, the second configuration information, the third configuration information, and the fourth configuration information may each directly include the DRX configuration parameter, that is, may include all DRX configuration parameters, or may include a part of DRX configuration parameters. By way of example, including all the DRX configuration parameters may be understood as including both the DRX related timers and other parameters unrelated to timers such as a DRX cycle. Including a part of the DRX configuration parameters may be understood as including only a length of a DRX timer. In an optional embodiment, the part of the DRX configuration parameters include at least one of:

a length of the DRX inactivity timer;
a length of the HARQ round-trip time timer; or
a length of the HARQ retransmission timer.

Here, the part of the DRX configuration parameters can include the length(s) of the DRX timer(s) corresponding to the HARQ process, so that after the corresponding configuration information is obtained through the preset rule, the length(s) of the DRX timer(s) in the configuration information can be obtained.
Further, different DRX timers have different starting points. A starting moment of the DRX inactivity timer is a moment at which a resource configuration or scheduling information is received. A starting moment of the HARQ round-trip time timer is a first symbol after the transmission of uplink data (specifically, PUSCH) is finished. A starting moment of the HARQ retransmission timer is a moment at which the HARQ round-trip time timer times out.
In the embodiment, by setting each configuration information to include the DRX configuration parameter and/or the DRX configuration number, the length(s) of the DRX timer(s) can be determined quickly and accurately by using the configuration number or the DRX configuration parameter, thus improving the efficiency and accuracy of determining the length(s) of the DRX timer(s). Furthermore, the DRX configuration parameter includes a part of DRX configuration parameters, and the part of the DRX configuration parameters directly includes the length(s) of the DRX timer(s), so that the length(s) of the DRX timer(s) can be simply and intuitively determined, further improving the efficiency and accuracy of determining the length(s) of the DRX timer(s).
The following embodiment describes an acquisition manner of the first configuration information, the second configuration information, and the fourth configuration information based on a case that the first device is a terminal (including a sending terminal and a receiving terminal). On the basis of the above embodiments, in another embodiment, the method further includes at least one of:

receiving at least one of the following contents sent by a network device through a dedicated signaling: the first configuration information, the second configuration information, or the fourth configuration information;
receiving at least one of the following contents sent by the network device through a system information block (SIB): the first configuration information, the second configuration information, or the fourth configuration information: or
acquiring at least one of the following contents from pre-configured information: the first configuration information, the second configuration information, or the fourth configuration information.

The dedicated signaling may include, for example, a radio resource control (RRC) signaling. Certainly, the dedicated signaling may alternatively include other signalings such as a media access control (MAC) control element (CE) or a physical layer signaling.
Specifically, for the acquisition manner through the dedicated signaling, the first configuration information, the second configuration information, or the fourth configuration information may be carried in the dedicated signaling, and sent to the terminal by the network device through the dedicated signaling. The terminal parses the received dedicated signaling to obtain the first configuration information, the second configuration information, or the fourth configuration information carried therein.

For the acquisition manner through the system information block, the first configuration information, the second configuration information, or the fourth configuration information may be carried in the system information block, and sent to the terminal by the network device through the system information block. The terminal parses the received system information block to obtain the first configuration information, the second configuration information, or the fourth configuration information carried therein.

For the acquisition manner through the pre-configured information, the pre-configured information may be information configured in advance for the terminal, and may include the first configuration information, the second configuration information, or the fourth configuration information.

In addition, the first configuration information, the second configuration information, and the fourth configuration information may be acquired in the same manner or in different manners.

Further, in a case that the first device is a network device, a determining manner for the first configuration information, the second configuration information, the third configuration information, and the fourth configuration information may include at least one of:

determining at least one of: the first configuration information, the second configuration information, the third configuration information, or the fourth configuration information; or
acquiring at least one of the following contents from pre-configured information: the first configuration information, the second configuration information, the third configuration information, or the fourth configuration information.

That is, the network device may directly determine one or more of the first configuration information, the second configuration infonnation, the third configuration information, and the fourth configuration information. Certainly, the corresponding pre-configured information may be configured for the network device in advance, and then, the network device may obtain one or more of the first configuration information, the second configuration information, the third configuration information, and the fourth configuration information from the pre-configured information. In conclusion, the network device can determine, in any manner, one or more of the first configuration information, the second configuration information, the third configuration information, and the fourth configuration information.

In the embodiment, different manners are set to obtain the first configuration information, the second configuration information, the third configuration information, or the fourth configuration information, so that the length of the relevant timing of the HARQ process can be uniquely determined based on the configuration information, thereby ensuring that the DRX can normally run.

The following embodiment mainly describes relevant contents of the first configuration information in the preset rule 1. First, how the first configuration information is carried is described. In another embodiment, the first configuration information is carried in a mapping restriction parameter corresponding to the second target object.

As mentioned above, the second target object includes the DRB, SRB, or LCH, and the DRB, SRB, or LCH included in the HARQ process has the corresponding first configuration information. The first configuration information may be carried in the mapping restriction parameter corresponding to the DRB, SRB, or LCH. The mapping restriction parameter may specifically refer to a logical channel prioritization (LCP) mapping restriction parameter.

In the embodiment, the first configuration information is carried in the mapping restriction parameter corresponding to the second target object, so that after the terminal obtains a Uu or sidelink scheduling grant, the terminal can quickly determine DRBs, SRBs or LCHs that can use a resource scheduled by the grant.

Generally, when the terminal or the network device uses the HARQ process for data transmission, a corresponding MAC PDU needs to be generated and the MAC PDU is transmitted using the HARQ process. MAC PDU multiplexing may be involved in the generation of the MAC PDU.

The following embodiment explains the MAC PDU multiplexing. On the basis of the above embodiments, the method further includes any one of:

allowing second target objects with same first configuration information to be multiplexed into one MAC PDU corresponding to the HARQ process; and
allowing second target objects with different first configuration information to be multiplexed into one MAC PDU corresponding to the HARQ process.

As mentioned above, the second target object includes the DRB, SRB or LCH, and each DRB, SRB or LCH is configured with the first configuration information, so that during the MAC PDU multiplexing, as one case, the first configuration information corresponding to each DRB, SRB or LCH may be obtained, and the DRBs, SRBs or LCHs with the same first configuration information are allowed to be multiplexed into one MAC PDU.

As another case, the first configuration information corresponding to each DRB, SRB or LCH may be obtained, and the DRBs, SRBs or LCHs with different first configuration information are allowed to be multiplexed into one MAC PDU.

In the embodiment, the second target objects are allowed to be multiplexed into one MAC PDU in two different ways, while the two different ways are not used at the same time.

If the second target objects with different first configuration information are allowed to be multiplexed into one MAC PDU corresponding to the HARQ process in the above embodiment, and the length of each DRX timer is determined based on the first configuration information corresponding to the second target object included in the HARQ process, then a determining manner of the first configuration information includes any one of:

first item: the first configuration information corresponding to the second target object with a highest priority in the MAC PDU corresponding to the HARQ process;

second item: the first configuration information corresponding to the second target object with a lowest priority in the MAC PDU corresponding to the HARQ process;

third item: the first configuration information corresponding to a specified second target object in the MAC PDU corresponding to the HARQ process; and

fourth item: determining the first configuration information corresponding to each second target object in the MAC PDU corresponding to the HARQ process, and determining the first configuration information based on a number of second target objects configured with the same first configuration information.

For the first item, the second target objects multiplexed into the MAC PDU corresponding to the HARQ process may be acquired, the first configuration information corresponding to each acquired second target object may be obtained, and then, the second target object with the highest priority may be selected from the acquired second target objects, and the length of each DRX timer may be determined based on the first configuration information corresponding to the second target object with the highest priority.

For the second item, the second target objects multiplexed into the MAC PDU corresponding to the HARQ process may be acquired, the first configuration information corresponding to each acquired second target object may be obtained, and then, the second target object with the lowest priority may be selected from the acquired second target objects, and the length of each DRX timer may be determined based on the first configuration information corresponding to the second target object with the lowest priority.

For the third item, the second target objects multiplexed into the MAC PDU corresponding to the HARQ process may be acquired, the specified second target object is found therefrom, and the length of each DRX timer may be determined based on the first configuration information corresponding to the specified second target object. In a case that the first device is the terminal, the specified second target object may be configured by the network device for the terminal, or may be directly determined by the terminal from pre-configured information. In a case that the first device is the network device, the specified second target object may be directly determined by the network device, or may be determined by the network device from pre-configured information.

For the fourth item, the second target objects multiplexed into the MAC PDU corresponding to the HARQ process may be acquired, the first configuration information corresponding to each acquired second target object may be obtained, and then, a number of second target objects with the same first configuration information may be determined, and the first configuration information of the second target object included in the HARQ process may be determined based on the number. Here, when the first configuration information is determined by the numbers, for example, a maximum number may be determined from the numbers of second target objects having the same first configuration information, and the first configuration information corresponding to the maximum number may be determined as the first configuration information of the second target object included in the HARQ process.

In the embodiment, one first configuration information may be uniquely determined in different manners, and the length of each DRX timer may be determined based on the first configuration information, so that the length of each DRX timer related to the HARQ process can be uniquely determined, and the DRX timers can be maintained.

The above embodiment mainly describes the first configuration information in the preset rule 1 in detail, and the following embodiment mainly explains relevant contents of the second configuration information in the preset rule 2.

In another embodiment, the above method may further include the following step:

if the resource is a pre-configured resource, carrying the second configuration information in configuration information or a pre-configured resource activation signaling corresponding to the pre-configured resource.

The resource is a resource used for transmission of the HARQ process. A corresponding transmission block is generally allocated to the HARQ process during the transmission of the HARQ process, and the transmission block corresponds to a certain resource. If the resource is a pre-configured resource, that is, the resource is a resource configured in advance, the second configuration information may be carried in the configuration information corresponding to the pre-configured resource or the activation signaling corresponding to the pre-configured resource.

Here, the configuration corresponding to the pre-configured resource may be an RRC signaling in which the second configuration information may be carried. The activation signaling may be a signaling sent through a physical downlink control channel (PDCCH), such as downlink control information (DCI), in which the second configuration information may be carried.

In the embodiment, if the resource used for the transmission of the HARQ process is the pre-configured resource, the second configuration information is carried in the configuration information corresponding to the pre-configured resource or the pre-configured resource activation signaling, so that the length of each DRX timer related to the HARQ process can be uniquely determined, and therefore, the DRX timers can be maintained.

The following embodiment describes a specific determination manner of the second configuration information.

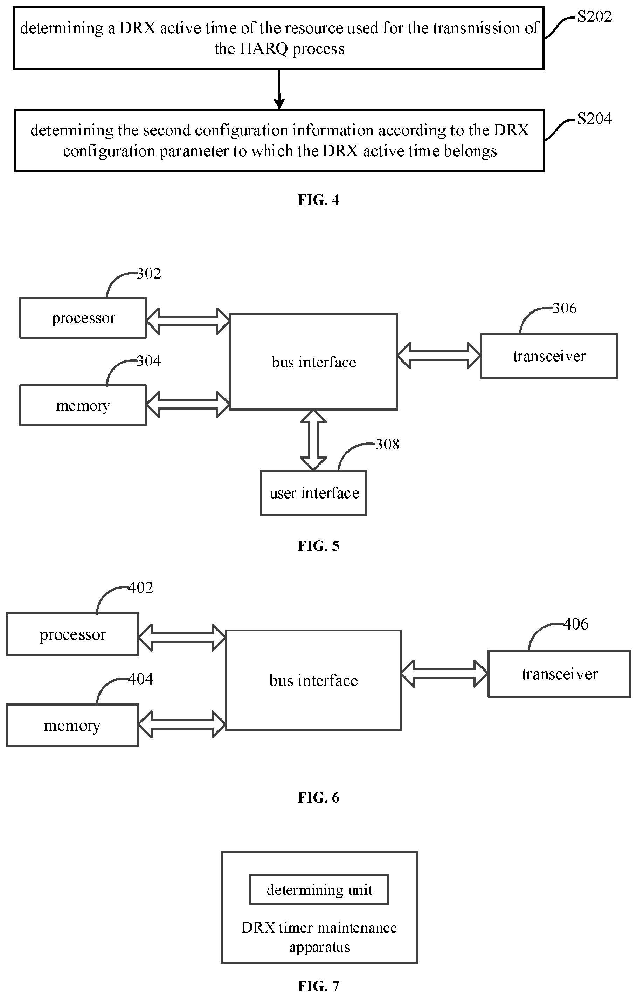

In another embodiment, as shown in FIG. 4, the above method may further include the following steps:

S202: determining a DRX active time of the resource used for the transmission of the HARQ process: and

S204: determining the second configuration information according to the DRX configuration parameter to which the DRX active time belongs.

The active time refers to a time within which the terminal is allowed to monitor the control channel, and it can be referred to as Active Time.

Specifically, the DRX active time of the resource used for the transmission of the HARQ process may be obtained first, the second configuration information may be then determined according to the DRX configuration to which the DRX active time belongs, and further, the length of each DRX timer in the HARQ process may be determined based on the second configuration information.

When the second configuration information is determined according to the DRX configuration parameter to which the DRX active time belongs, in an optional embodiment, if the DRX active time is the active time of one DRX configuration corresponding to one resource, the configuration information in the DRX configuration may be directly determined as the second configuration information.

If the DRX active time is an intersection of active times of multiple DRX configurations corresponding to the resource, the second configuration information is determined by adopting any one of the following manners:

determining the second configuration information according to one DRX configuration randomly selected from the multiple DRX configurations; and

sorting the multiple DRX configurations, and determining the second configuration information according to a first DRX configuration after sorting.

That is, if the resource used by the HARQ process is located in the intersection of the active times corresponding to the multiple DRX configurations, for example, the DRX active time is the intersection of the active times of the multiple DRX configurations corresponding to the resource, one way of determining the second configuration information may include: randomly selecting one DRX configuration from the multiple DRX configurations, and determining the configuration information corresponding to the randomly selected DRX configuration as the second configuration information.

Another way of determining the second configuration information may include: sorting the multiple DRX configurations, specifically, sorting the multiple DRX configurations according to an ascending order or a descending order of the numbers of the DRX configurations to generate a queue, then selecting the first DRX configuration in the queue, and determining the configuration information corresponding to the first DRX configuration as the second configuration information.

In the embodiment, the DRX active time in which the resource used for the transmission of the HARQ process is located is determined, and the second configuration information is determined according to the DRX configuration parameter to which the DRX active time belongs, so that the length of each DRX timer related to the HARQ process can be uniquely determined, and therefore, the DRX timers can be maintained.

The following embodiment describes a selection procedure of the second target object in rule 1 based on a case that the first device is a sending terminal. When communication is performed using different interfaces such as the Uu interface and the PC5 interface, ways of selecting the second target object or selected target ways by the sending terminal may vary. The ways of selecting the second target object when communication is performed using the Uu interface and the PC5 interface are respectively described below.

In an embodiment, the way of selecting the second target object when communication is performed using the Uu interface is described, and the method further includes:

selecting, according to a first condition, a second target object that is allowed to use an uplink grant, where the first condition at least includes the following content: the first configuration information corresponding to the second target object includes the DRX configuration parameter or the DRX configuration number corresponding to the uplink grant.

The second target object may be the above-mentioned DRB, SRB or LCH, and it is mainly illustrated here with the LCH as an example.

The uplink grant (i.e., UL grant) may be sent by the network device to the terminal, and the uplink grant may include a corresponding DRX configuration parameter or a corresponding DRX configuration number.

After receiving the uplink grant, the terminal may execute logical channel prioritization (LCP). Specifically, the LCP procedure may be an existing LCP procedure, and may specifically include: determining a logical channel capable of using the UL grant according to logical channel mapping restriction parameters corresponding to logical channels, and then performing a first round of resource allocation based on a guaranteed bit rate (GBR) according to a descending order of priorities of the logical channels. After the first round of resource allocation is finished, if residual resources exist, a second round of resource allocation is continuously performed according to the descending order of the priorities of the logical channels until data of all the logical channels is allocated with resources or the resources are used up. The difference from the existing LCP procedure is that the above-mentioned logical channel mapping restriction parameters may include the first configuration information, and in determination of the logical channel capable of using the UL grant according to the logical channel mapping restriction parameters corresponding to the logical channels, the first configuration information corresponding to each logical channel may be obtained first, and it is determined whether the first configuration information of each logical channel satisfies the first condition, specifically, whether the first configuration information of each logical channel includes the DRX configuration parameter or DRX configuration number corresponding to the uplink grant. If the first configuration information of a logical channel includes the DRX configuration parameter or DRX configuration number corresponding to the uplink grant, the logical channel may be used as a second target object that is allowed to use the uplink grant.

In the embodiment, the second target object that is allowed to use the uplink grant is selected according to the first condition, so that the second target object included in the HARQ process can be quickly determined in a Uu interface communication mode, and then, an efficiency of maintaining the DRX timers of the HARQ process is improved.

In another embodiment, the way of selecting the second target object when communication is performed using the PC5 interface is described below, and the method further includes:
selecting a second target object and/or an MAC CE that is allowed to use a sidelink grant according to a second condition, and selecting a layer two (L2) target address corresponding to the second target object and/or the MAC CE with a highest priority as a target L2 address according to a priority of the second target object and/or the MAC CE.

The second condition at least includes the following content: the first configuration information corresponding to the second target object includes a DRX configuration parameter or a DRX configuration number corresponding to the sidelink grant.

In the embodiment, the second target object may be the above-mentioned DRB, SRB or LCH, and it is mainly illustrated here with the LCH as an example.

In addition, the sidelink grant (i.e., SL grant) may be sent to the sending terminal by the network device, or may be sent to the sending terminal by another device. The sidelink grant may include a corresponding DRX configuration parameter or a corresponding DRX configuration number.

After receiving the sidelink grant, the sending terminal may execute LCP, and the specific LCP procedure may be the existing LCP procedure, and may be as follows.

First, the target L2 address is selected. In selection of the target L2 address, firstly, logical channels and/or MAC CEs meeting the second condition are determined, priorities of the logical channels and/or MAC CEs meeting the second condition are then obtained, and an L2 address corresponding to the logical channel and/or MAC CE with a highest priority is selected as the target L2 address. The second condition at least includes the following content: the first configuration information corresponding to the logical channel and/or the MAC CE includes the DRX configuration parameter or DRX configuration number corresponding to the SL grant.

Secondly, in an optional embodiment, a second target object satisfying a third condition is selected for the target L2 address, that is, a logical channel is further selected under the selected target L2 address. The third condition at least includes the following content: the second target object belongs to the target L2 address, and the first configuration information corresponding to the second target object includes the DRX configuration parameter or the DRX configuration number corresponding to the sidelink grant.

That is, the logical channel that belongs to the target L2 address and has the corresponding first configuration information including the DRX configuration parameter or DRX configuration number corresponding to the SL grant may be selected as a final second target object under the selected target L2 address.

Finally, two rounds of resource allocation may be performed according to priorities of logical channels based on the selected target L2 address and the selected second target object. The procedure of the two rounds of resource allocation is the same as that of the resource allocation in the Uu interface communication manner, and therefore is not repeated.

In the embodiment, the target L2 address may be determined quickly and accurately by selecting the second target object that is allowed to use the sidelink grant according to the second condition and determining the target L2 address based on the priority of the second target object and/or MAC CE. Further, the second target object meeting the third condition may be selected for the target L2 address, so that the selection of the second target object under sidelink may be implemented, it is ensured that the second configuration information corresponding to the second target object can be accurately obtained, and the maintenance of the DRX timers can be implemented.

The following embodiment describes a possible configuration manner of multiple DRX configurations on the first target object still based on the case that the first device is the sending terminal.

In another embodiment, the above method further includes the following step:
sending auxiliary information to the network device; the auxiliary information being configured for instructing the network device to configure multiple DRX configurations for the sending terminal.

The auxiliary information includes at least one of:

an arrival time of a third target object:
a cycle of the third target object;
jitter of the third target object; or
a data transmission end time of the third target object.

In an optional embodiment, the third target object includes at least one of:

a quality of service (QoS) flow;
a data burst:
a packet data unit (PDU) set; or
a PDU.

In the embodiment, the sending terminal may send the auxiliary information about the third target object to the network device, and the network device may set the multiple DRX configurations for the sending terminal after receiving the auxiliary information.

In the embodiment, the sending terminal sends the auxiliary information related to the third target object to the network device, so that the network device can configure the multiple DRX configurations for the sending terminal quickly, timely, and accurately, thus improving a power saving performance of the sending terminal. Further, the third target object includes objects in various situations, which may improve an application scope of configuring the DRX configurations for the sending terminal.

The following describes usage scenarios and specific usage procedures of the above four preset rules by specific embodiments.

Embodiment 1: preset rule 1 (Uu interface)

Step 1, a termianl reports auxiliary information to a network device.

The terminal sends the auxiliary information to the network device, where the auxiliary information is configured for instructing the network device to configure multiple DRX configurations for a sending terminal.

The auxiliary information includes at least one of:

an arrival time of a third target object:
a cycle of the third target object;
jitter of the third target object; or
a data transmission end time of the third target object.

The third target object is a target object of the Uu interface, and may specifically include, but is not limited to, at least one of:

a QoS flow;
a data burst;
a PDU set; or
a PDU.

Step 2, the network device configures multiple DRX configurations on a first target object for the terminal.

The first target object includes any one of: a terminal or a network device; a serving cell; a serving frequency point; a bandwidth part (BWP); a cell group; a BWP set; and a serving frequency point set.

Each of the multiple DRX configurations includes a length of an on duration timer, a DRX offset, a length of a DRX inactivity timer, a length of an HARQ round-trip time timer, a length of an HARQ retransmission timer, etc.

Step 3, the terminal receives a UL grant, determines and organizes an MAC PDU according to the UL grant, and transmits data by utilizing a corresponding HARQ process.

For the UL grant, the terminal performs LCP. The specific LCP procedure may be an existing LCP procedure, and may include: determining a logical channel capable of using the UL grant according to logical channel mapping restriction parameters corresponding to logical channels, and then performing a first round of resource allocation based on a GBR according to a descending order of priorities of the logical channels. After the first round of resource allocation is finished, if residual resources exist, a second round of resource allocation is continuously performed according to the descending order of the priorities of the logical channels until data of all the logical channels is allocated with resources or the resources are used up.

Optionally, the first configuration information is included in the mapping restriction parameter of the logical channel, and the first configuration information includes at least one of:

a DRX configuration parameter; or
a DRX configuration number.

The DRX configuration parameter may include all of or a part of parameters corresponding to the DRX configuration.

The part of DRX configuration parameters include at least one of:

the length of the DRX inactivity timer;
the length of the HARQ round-trip time timer; or
the length of the HARQ retransmission timer.

The terminal generates the MAC PDU according to the LCP procedure, sends the MAC PDU by utilizing the HARQ process corresponding to the UL grant, and meanwhile maintains the related DRX timer(s) for the HARQ process. Specifically, the terminal determines a unique length of each DRX timer corresponding to the HARQ process based on a preset rule. The DRX timers include, but are not limited to: the DRX inactivity timer, the HARQ round-trip time timer, and the HARQ retransmission timer. The preset rule may be determining the length of each DRX timer based on the first configuration information corresponding to a second target object included in the HARQ process.

The first configuration information may be obtained through at least one of: configuration information sent through a dedicated signaling (such as RRC signaling), configuration information sent through an SIB, or pre-configured information.

Optionally, during MAC PDU data multiplexing, any one of the following operations may be performed:

allowing second target objects with same first configuration information to be multiplexed into one MAC PDU; and
allowing second target objects with different first configuration information to be multiplexed into one MAC PDU.

Further, if the second target objects with different first configuration information are allowed to be multiplexed into one MAC PDU, the length of each DRX timer in the HARQ process can be determined based on the first configuration information, and the first configuration information may specifically be any one of:

the first configuration information corresponding to the second target object with a highest priority in the MAC PDU corresponding to the HARQ process;
the first configuration information corresponding to the second target object with a lowest priority in the MAC PDU corresponding to the HARQ process:
the first configuration information corresponding to a specified second target object (specifically, network-configured or pre-configured) in the MAC PDU corresponding to the HARQ process; and
determining the first configuration information corresponding to each second target object in the MAC PDU, and determining the first configuration information based on a number of second target objects configured with the same first configuration information.

In the embodiment, the corresponding first configuration information may be determined based on the first configuration information included in the mapping restriction parameter corresponding to the logical channel. If the first configuration information includes the DRX configuration number. the terminal determines corresponding DRX configuration parameters by using the DRX configuration number, and takes the length of the DRX inactivity timer, the length of the HARQ round-trip time timer and the length of the HARQ retransmission timer included in the determined DRX configuration parameters as the respective lengths of the DRX inactivity timer, the HARQ round-trip time timer and the HARQ retransmission timer to be used in the HARQ process.

Certainly, different DRX timers have different starting points. For example, the starting point of the DRX inactivity timer may be a moment at which the UL grant is received; a starting moment of the HARQ round-trip time timer may be a first symbol after the transmission of a PUSCH is finished; and a starting moment of the HARQ retransmission timer may be a moment at which the HARQ round-trip time timer times out.

Embodiment 2: preset rule 1 (PC5 interface)

Step 1, a terminal reports auxiliary information to a network.

The terminal sends the auxiliary information to a network device, and the auxiliary information is configured for instructing the network device to configure multiple DRX configurations for a sending terminal.

The auxiliary information includes at least one of:

an arrival time of a third target object:
a cycle of the third target object;
jitter of the third target object; or
a data transmission end time of the third target object.

The third target object is a target object of a Uu interface, and may specifically include, but is not limited to, at least one of:

a QoS flow;
a data burst;
a PDU set; or
a PDU.

Step 2, the network device configures multiple DRX configurations on a first target object for the terminal.

The first target object includes any one of: a terminal or a network device; a serving cell: a serving frequency point; a bandwidth part (BWP); a cell group; a BWP set; and a serving frequency point set.

Each of the multiple DRX configurations includes parameters such as a length of an on duration timer, a DRX offset, a length of a DRX inactivity timer, a length of an HARQ round-trip time timer, and a length of an HARQ retransmission timer.

Step 3, the terminal receives an SL grant, determines and organizes an MAC PDU according to the SL grant, and transmits data by utilizing a corresponding HARQ process.

For the SL grant, the terminal performs LCP. The specific LCP procedure can be an existing LCP procedure.

First, a target L2 address is selected. In selection of the target L2 address, a logical channel and/or an MAC CE satisfying a first condition is first determined, and then, an L2 address corresponding to the logical channel and/or the MAC CE with a highest priority is used as the target L2 address. The first condition at least includes the following content: first configuration information corresponding to the logical channel includes a DRX configuration parameter or a DRX configuration number corresponding to the SL grant.

Secondly, a logical channel is further selected under the selected target L2 address. That is, a logical channel belonging to the target L2 address and satisfying a second condition is selected under the selected target L2 address. The second condition includes at least the following content: the first configuration information corresponding to the logical channel includes the DRX configuration parameter or the DRX configuration number corresponding to the SL grant.

Finally, two rounds of resource allocation are performed according to priorities of logical channels based on the selected target L2 address and the selected target logical channel (a procedure of the two rounds of resource allocation is the same as the procedure under the Uu interface).

The first configuration information is included in a mapping restriction parameter of the logical channel, and the first configuration information includes at least one of:

a DRX configuration parameter; or
a DRX configuration number.

The DRX configuration parameter may include all of or a part of parameters corresponding to the DRX configuration, and the part of DRX configuration parameters include at least one of:

the length of the DRX inactivity timer;
the length of the HARQ round-trip time timer; or
the length of the HARQ retransmission timer.

The terminal generates the MAC PDU according to the LCP procedure, sends the PDU by utilizing the HARQ process corresponding to the SL grant, and meanwhile maintains the related DRX timer(s) for the HARQ process. Specifically, the terminal determines a unique length of each DRX timer corresponding to the HARQ process based on a preset rule. The DRX timers include, but are not limited to: the DRX inactivity timer, the HARQ round-trip time timer, and the HARQ retransmission timer. The preset rule may be determining the length of each DRX timer based on the first configuration information corresponding to a second target object included in the HARQ process.

The first configuration information may be obtained through at least one of: configuration information sent through a dedicated signaling (such as RRC signaling), configuration information sent through an SIB, or pre-configured information.

Optionally, during MAC PDU data multiplexing, any one of the following operations may be performed:

allowing second target objects with same first configuration information to be multiplexed into one MAC PDU; and allowing second target objects with different first configuration information to be multiplexed into one MAC PDU.

Further, if the second target objects with different first configuration information are allowed to be multiplexed into one MAC PDU, the length of each DRX timer in the HARQ process can be determined based on the first configuration information, and the first configuration information may specifically be any one of:

the first configuration information corresponding to the second target object with a highest priority in the MAC PDU corresponding to the HARQ process;
the first configuration information corresponding to the second target object with a lowest priority in the MAC PDU corresponding to the HARQ process;
the first configuration information corresponding to a specified second target object (specifically, network-configured or pre-configured) in the MAC PDU corresponding to the HARQ process; and
determining the first configuration information corresponding to each second target object in the MAC PDU, and determining the first configuration information based on a number of second target objects with the same first configuration information.

In the embodiment, the corresponding first configuration information may be determined based on the first configuration information included in the mapping restriction parameter corresponding to the logical channel. If the first configuration information includes the DRX configuration number, the terminal determines the corresponding DRX configuration parameters by using the DRX configuration number, and takes the length of the DRX inactivity timer, the length of the HARQ round-trip time timer and the length of the HARQ retransmission timer included in the determined DRX configuration parameters as the respective lengths of the DRX inactivity timer, the HARQ round-trip time timer and the HARQ retransmission timer to be used in the HARQ process. Certainly, different DRX timers have different starting points.

Embodiment 3: preset rule 2

Step 1, a terminal reports auxiliary information to a network device.

The terminal sends the auxiliary information to the network device, and the auxiliary information is configured for instructing the network device to configure multiple DRX configurations for a sending terminal.

The auxiliary information includes at least one of:

an arrival time of a third target object:
a cycle of the third target object;
jitter of the third target object; or
a data transmission end time of the third target object.

The third target object is a target object of a Uu interface, and may specifically include, but is not limited to, at least one of:

a QoS flow;
a data burst:
a PDU set; or
a PDU.

Step 2: the network device configures multiple DRX configurations on a first target object for the terminal.

The first target object includes any one of: a terminal or a network device; a serving cell; a serving frequency point; a bandwidth part (BWP); a cell group; a BWP set; and a serving frequency point set.

Each of the multiple DRX configurations includes parameters such as a length of an on duration timer, a DRX offset, a length of a DRX inactivity timer, a length of an HARQ round-trip time timer, and a length of an HARQ retransmission timer.

Step 3, the terminal receives a UL grant or an SL grant, organizes an MAC PDU according to the UL grant or the SL grant, and transmits data by utilizing a corresponding HARQ process.

The UL grant or the SL grant may be a dynamically scheduled grant or a pre-configured grant.

Taking the UL grant as an example, the terminal performs LCP for the UL grant. The specific LCP procedure may be an existing LCP procedure, and may include: determining a logical channel capable of using the UL grant according to logical channel mapping restriction parameters corresponding to logical channels, and then performing a first round of resource allocation based on a GBR according to a descending order of priorities of the logical channels. After the first round of resource allocation is finished, if residual resources exist, a second round of resource allocation is continuously performed according to the descending order of the priorities of the logical channels until data of all the logical channels is allocated with resources or the resources are used up.

The terminal generates the MAC PDU according to the LCP procedure, sends the PDU by utilizing the HARQ process corresponding to the UL grant or the SL grant, and meanwhile maintains the related DRX timer(s) for the HARQ process.

Specifically, the terminal may determine a unique length of each DRX timer corresponding to the HARQ process based on a preset rule. The DRX timers include, but are not limited to: a DRX inactivity timer, an HARQ round-trip time timer, and an HARQ retransmission timer. The preset rule may be determining the length of each DRX timer based on second configuration information corresponding to a resource (including a dynamically scheduled resource and a pre-configured granted resource) used for transmission of the HARQ process. The second configuration information includes at least one of:

a DRX configuration parameter; or
a DRX configuration number.

The DRX configuration parameter may include all of or a part of parameters corresponding to the DRX configuration, and the part of DRX configuration parameters include at least one of:

the length of the DRX inactivity timer;
the length of the HARQ round-trip time timer; or
the length of the HARQ retransmission timer.

The second configuration information may be obtained through at least one of: configuration information sent through a dedicated signaling (such as RRC signaling), configuration information sent through an SIB, or pre-configured information.

Further, if an active time corresponding to the UL grant or a sidelink control information (SCI) scheduled resource or a resource used for the transmission of the HARQ process is determined according to one DRX configuration, the length of each DRX timer corresponding to the DRX configuration is used as the length of each corresponding DRX timer in the HARQ process. If the resource used for the HARQ process is located in an intersection of active times corresponding to multiple DRX configurations, the specific second configuration information may be determined by using one of the following rules:

selecting one DRX configuration randomly from the multiple DRX configurations, and determining the second configuration information according to the selected DRX configuration; and
sorting the multiple DRX configurations according to an ascending order or a descending order of numbers of the DRX configurations to generate a queue, selecting a first DRX configuration in the queue, and determining the second configuration information according to the selected first DRX configuration.

Embodiment 4: preset rule 3

Step 1, a terminal reports auxiliary information to a network device.

The terminal sends the auxiliary information to the network device, and the auxiliary information is configured for instructing the network device to configure multiple DRX configurations for a sending terminal.

The auxiliary information includes at least one of:

an arrival time of a third target object;
a cycle of the third target object;
jitter of the third target object; or
a data transmission end time of the third target object.

The third target object is a target object of a Uu interface, and may specifically include, but is not limited to, at least one of:

a QoS flow;
a data burst;
a PDU set; or
a PDU.

Step 2, the network device configures multiple DRX configurations on a first target object for the terminal.

The first target object includes any one of: a terminal or a network device; a serving cell; a serving frequency point; a bandwidth part (BWP); a cell group: a BWP set; and a serving frequency point set.

Each of the multiple DRX configurations includes parameters such as a length of an on duration timer, a DRX offset, a length of a DRX inactivity timer, a length of an HARQ round-trip time timer, and a length of an HARQ retransmission timer.

Step 3, the terminal receives a UL grant or an SL grant, organizes an MAC PDU according to the UL grant or the SL grant, and transmits data by utilizing a corresponding HARQ process.

Taking the UL grant as an example, the terminal performs LCP for the UL grant. The specific LCP procedure may be an existing LCP procedure, and may include: determining a logical channel capable of using the UL grant according to logical channel mapping restriction parameters corresponding to logical channels, and then performing a first round of resource allocation based on a GBR according to a descending order of priorities of the logical channels. After the first round of resource allocation is finished, if residual resources exist, a second round of resource allocation is continuously performed according to the descending order of the priorities of the logical channels until data of all the logical channels is allocated with resources or the resources are used up.

The terminal generates the MAC PDU according to the LCP procedure, sends the PDU by utilizing the HARQ process corresponding to the UL grant, and meanwhile maintains the related DRX timer(s) for the HARQ process.

Specifically, the terminal determines a unique length of each DRX timer corresponding to the HARQ process based on a preset rule. The DRX timers include, but are not limited to: the DRX inactivity timer, the HARQ round-trip time timer, and the HARQ retransmission timer. The preset rule may be determining the length of each DRX timer based on third configuration information carried in a scheduling signaling (for example, DCI for Uu interface and/or SCI for SL interface), and the third configuration information includes at least one of:

a DRX configuration parameter; or
a DRX configuration number.

The DRX configuration parameter may include all of or a part of parameters corresponding to the DRX configuration, and the part of DRX configuration parameters include at least one of:

the length of the DRX inactivity timer;
the length of the HARQ round-trip time timer; or
the length of the HARQ retransmission timer.

That is, the terminal may directly determine the length of each DRX timer corresponding to the HARQ process based on the third configuration information contained in the DCI for the UL grant or the SCI.

Embodiment 5: preset rule 4

Step 1, a terminal reports auxiliary information to a network device.

The terminal sends the auxiliary information to the network device, and the auxiliary information is configured for instructing the network device to configure multiple DRX configurations for a sending terminal.

The auxiliary information includes at least one of:

an arrival time of a third target object;
a cycle of the third target object;
jitter of the third target object; or
a data transmission end time of the third target object.

The third target object is a target object of a Uu interface, and may specifically include, but is not limited to, at least one of:

a QoS flow;
a data burst;
a PDU set; or
a PDU.

Step 2, the network device configures multiple DRX configurations on a first target object for the terminal.

The first target object includes any one of: a terminal or a network device; a serving cell; a serving frequency point; a bandwidth part (BWP); a cell group: a BWP set; and a serving frequency point set.

Each of the multiple DRX configurations includes parameters such as a length of an on duration timer, a DRX offset, a length of a DRX inactivity timer, a length of an HARQ round-trip time timer, and a length of an HARQ retransmission timer.

Step 3, the terminal receives a UL grant or an SL grant, organizes an MAC PDU according to the UL grant or the SL grant, and transmits data by utilizing a corresponding HARQ process.

Taking the UL grant as an example, the terminal performs LCP for the UL grant. The specific LCP procedure may be an existing LCP procedure, and may include: determining a logical channel capable of using the UL grant according to logical channel mapping restriction parameters corresponding to logical channels, and then performing a first round of resource allocation based on a GBR according to a descending order of priorities of the logical channels. After the first round of resource allocation is finished, if residual resources exist, a second round of resource allocation is continuously performed according to the descending order of the priorities of the logical channels until all data of all the logical channels is allocated with resources or the resources are used up.

The terminal generates the MAC PDU according to the LCP procedure, sends the PDU by utilizing the HARQ process corresponding to the UL grant, and meanwhile maintains the related DRX timer(s) for the HARQ process.

Specifically, the terminal determines a unique length of each DRX timer corresponding to the HARQ process based on a preset rule. The DRX timers include, but are not limited to: the DRX inactivity timer, the HARQ round-trip time timer, and the HARQ retransmission timer. The preset rule may be determining the length of each DRX timer based on fourth configuration information corresponding to an HARQ process number of the HARQ process, and the fourth configuration information includes at least one of:

a DRX configuration parameter; or
a DRX configuration number.

The DRX configuration parameter may include all of or a part of parameters corresponding to the DRX configuration, and the part of DRX configuration parameters include at least one of:

the length of the DRX inactivity timer;
the length of the HARQ round-trip time timer; or
the length of the HARQ retransmission timer.

The fourth configuration information may be obtained through at least one of: configuration information sent through a dedicated signaling (such as RRC signaling), configuration information sent through an SIB, or pre-configured information.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same technical concept, a terminal (including a sending terminal and/or a receiving terminal) is further provided in an embodiment of the present application. The terminal can achieve the functions of the terminal side in the foregoing embodiments.

Reference can be made to FIG. 5, which is a structural block diagram of a terminal provided in an embodiment. The terminal includes a processor 302, a memory 304, a transceiver 306, a bus interface, and a user interface 308.

The transceiver 306 is configured to receive and send data under control of the processor 302.

A bus architecture may include any number of interconnected buses and bridges, which are specifically linked together by various circuits of one or more processors represented by the processor 302 and memories represented by the memory. The bus architecture may also link together various other circuits such as peripherals, voltage regulators, and power management circuits, which are well known in the art, and therefore, will not be further described herein. The bus interface provides an interface. The transceiver may be a number of elements, that is, include a transmitter and a receiver, and provide a unit for communication with various other apparatuses over transmission media including wireless channels, wired channels, fiber optic cables, or the like. For different user equipment, the user interface 308 may be an interface capable of externally or internally connecting required devices, and the connected devices include, but are not limited to, a keypad, a display, a loudspeaker, a microphone, a joystick, or the like. The processor is responsible for managing the bus architecture and general processing, and the memory may store data used when the processor performs operations.

Optionally, the processor 302 may be a central processing unit (CPU), an application specific integrated circuit (ASIC), a field-programmable gate array (FPGA), or a complex programmable logic device (CPLD), and may also adopt a multi-core architecture.

The processor 302 can invoke a program stored in the memory 304, and is configured to perform any method according to the embodiments of the present application based on obtained executable instructions. The processor 302 and the memory 304 may be physically arranged separately.

In an embodiment, the processor 302 is configured to determine, in a case where there are multiple DRX configurations for a first target object, a length of each DRX timer corresponding to an HARQ process based on a preset rule.

Optionally, the first target object includes at least one of:

a first device;
a serving cell;
a serving frequency point;
a bandwidth part (BWP);
a master cell group (MCG);
a secondary cell group (SCG);
a BWP set; or
a serving frequency point set.

Optionally, the DRX timer includes at least one of:

a DRX inactivity timer:
an HARQ round-trip time timer; or
an HARQ retransmission timer.

In an embodiment, the preset rule includes at least one of the following rules:

the length of each DRX timer is determined based on first configuration information corresponding to a second target object included in the HARQ process; where the second target object includes a data radio bearer (DRB) or a signaling radio bearer (SRB) or a logic channel (LCH);
the length of each DRX timer corresponding to the HARQ process is determined based on second configuration information corresponding to a resource used for transmission of the HARQ process;
the length of each DRX timer corresponding to the HARQ process is determined based on third configuration information carried in a scheduling signaling; or
the length of each DRX timer corresponding to the HARQ process is determined based on fourth configuration information corresponding to a process number of the HARQ process.

Optionally, the scheduling signaling includes downlink control information (DCI) and/or sidelink control information (SCI).

In another embodiment, at least one of the first configuration information, the second configuration information, the third configuration information, or the fourth configuration information includes one or more of:

a DRX configuration parameter; and
a DRX configuration number.
wThe DRX configuration parameter may include all of or a part of parameters corresponding to the DRX configuration.

Optionally, the part of DRX configuration parameters include at least one of:

a length of the DRX inactivity timer;
a length of the HARQ round-trip time timer; or

a length of the HARQ retransmission timer.

In another embodiment, the transceiver 306 is configured to receive at least one of the following contents sent by a network device through a dedicated signaling: the first configuration information, the second configuration information, or the fourth configuration information;

the transceiver 306 is further configured to receive at least one of the following contents sent by the network device through a system information block: the first configuration information, the second configuration information, or the fourth configuration information; and

the processor 302 is further configured to acquire at least one of the following contents from pre-configured information: the first configuration information, the second configuration information, or the fourth configuration information.

In another embodiment, the first configuration information is carried in a mapping restriction parameter corresponding to the second target object.

In another embodiment, the processor 302 is further configured to perform at least one of the following operations:

allowing second target objects with same first configuration information to be multiplexed into one MAC PDU corresponding to the HARQ process; or

allowing second target objects with different first configuration information to be multiplexed into one MAC PDU corresponding to the HARQ process.

Optionally, if the second target objects with different first configuration information are allowed to be multiplexed into one MAC PDU corresponding to the HARQ process, and the length of each DRX timer is determined based on the first configuration information corresponding to the second target object included in the HARQ process, then a determining manner of the first configuration information includes any one of:

the first configuration information corresponding to the second target object with a highest priority in the MAC PDU corresponding to the HARQ process;

the first configuration information corresponding to the second target object with a lowest priority in the MAC PDU corresponding to the HARQ process;

the first configuration information corresponding to a specified second target object in the MAC PDU corresponding to the HARQ process: and

determining the first configuration information corresponding to each second target object in the MAC PDU corresponding to the HARQ process, and determining the first configuration information based on a number of second target objects configured with the same first configuration information.

In another embodiment, the processor 302 is further configured to carry, if the resource is a pre-configured resource, the second configuration information in configuration information or a pre-configured resource activation signaling corresponding to the pre-configured resource.

In another embodiment, the processor 302 is further configured to determine a DRX active time of the resource used for the transmission of the HARQ process; and determine the second configuration information according to the DRX configuration parameter to which the DRX active time belongs.

Optionally, if the DRX active time is an intersection of active times of multiple DRX configurations corresponding to the resource, the processor 302 is further configured to determine the second configuration information by adopting any one of the following manners:

determining the second configuration information according to one DRX configuration randomly selected from the multiple DRX configurations; and

sorting the multiple DRX configurations, and determining the second configuration information according to a first DRX configuration after sorting.

In another embodiment, the processor 302 is further configured to select a second target object that is allowed to use an uplink grant according to a first condition, where the first condition at least includes the following content: the first configuration information corresponding to the second target object includes a DRX configuration parameter or a DRX configuration number corresponding to the uplink grant.

In another embodiment, the processor 302 is further configured to select a second target object and/or an MAC control element (CE) that is allowed to use a sidelink grant according to a second condition, and select a layer two (L2) address corresponding to the second target object and/or the MAC CE with a highest priority as a target L2 address according to a priority of the second target object and/or a priority of the MAC CE; where the second condition at least includes the following content: the first configuration information corresponding to the second target object includes a DRX configuration parameter or a DRX configuration number corresponding to the sidelink grant.

Optionally, the processor 302 is further configured to select a second target object satisfying a third condition for the target L2 address; where the third condition at least includes the following content: the second target object belongs to the target L2 address, and the first configuration information corresponding to the second target object includes the DRX configuration parameter or the DRX configuration number corresponding to the sidelink grant.

In another embodiment, the processor 302 is further configured to send auxiliary information to the network device, the auxiliary information being configured for instructing the network device to configure multiple DRX configurations for the sending terminal.

The auxiliary information includes at least one of:

an arrival time of a third target object;
a cycle of the third target object;
jitter of the third target object; or
a data transmission end time of the third target object.

Optionally, the third target object includes at least one of:

a QoS flow:
a data burst;
a PDU set; or
a PDU.

It should be noted herein that the terminal according to the embodiment of the present application can implement all the method steps implemented in the method embodiment on the terminal side, and can achieve the same technical effects, and the same parts and beneficial effects of the embodiment as those of the method embodiment are not repeated herein.

Based on the same technical concept, a network device is further provided in an embodiment of the present application. The network device can achieve the functions of the network device side in the foregoing embodiments.

Reference can be made to FIG. 6, which is a structural block diagram of a network device provided in another embodiment. The network device includes a processor 402, a memory 404, a transceiver 406, and a bus interface.

The transceiver 406 is configured to receive and send data under control of the processor 402.

A bus architecture may include any number of interconnected buses and bridges, which are specifically linked together by various circuits of one or more processors represented by the processor 402 and memories represented by the memory. The bus architecture may also link together various other circuits such as peripherals, voltage regulators, and power management circuits, which are well known in the art, and therefore, will not be further described herein. The bus interface provides an interface. The transceiver may be a number of elements, that is, include a transmitter and a receiver, and provide a unit for communication with various other apparatuses over transmission media including wireless channels, wired channels, fiber optic cables, or the like. The processor is responsible for managing the bus architecture and general processing, and the memory may store data used when the processor x10 performs operations.

Optionally, the processor 402 may be a central processing unit (CPU), an application specific integrated circuit (ASIC), a field-programmable gate array (FPGA), or a complex programmable logic device (CPLD), and may also adopt a multi-core architecture.

The processor 402 can invoke a program stored in the memory 404, and is configured to perform any method according to the embodiments of the present application based on obtained executable instructions. The processor 402 and the memory 404 may be physically arranged separately.

In an embodiment, the processor 402 is configured to determine, in a case where there are multiple DRX configurations for a first target object, a length of each DRX timer corresponding to an HARQ process based on a preset rule.

Optionally, the first target object includes at least one of:

a first device;
a serving cell;
a serving frequency point;
a bandwidth part (BWP);

a master cell group (MCG);
a secondary cell group (SCG);
a BWP set; or
a serving frequency point set.

Optionally, the DRX timer includes at least one of:

a DRX inactivity timer;
an HARQ round-trip time timer; or
an HARQ retransmission timer.

In an embodiment, the preset rule includes at least one of the following rules:

the length of each DRX timer is determined based on first configuration information corresponding to a second target object included in the HARQ process; where the second target object includes a data radio bearer (DRB) or a signaling radio bearer (SRB) or a logic channel (LCH);
the length of each DRX timer corresponding to the HARQ process is determined based on second configuration information corresponding to a resource used for transmission of the HARQ process;
the length of each DRX timer corresponding to the HARQ process is determined based on third configuration information carried in a scheduling signaling; or
the length of each DRX timer corresponding to the HARQ process is determined based on fourth configuration information corresponding to a process number of the HARQ process.

Optionally, the scheduling signaling includes downlink control information (DCI) and/or sidelink control information (SCI).
In another embodiment, at least one of the first configuration information, the second configuration information, the third configuration information, or the fourth configuration information includes one or more of:

a DRX configuration parameter; and
a DRX configuration number.

The DRX configuration parameter may include all of or a part of parameters corresponding to the DRX configuration.
Optionally, the part of DRX configuration parameters include at least one of:

a length of the DRX inactivity timer;
a length of the HARQ round-trip time timer; or
a length of the HARQ retransmission timer.

In another embodiment, the processor 402 is further configured to configure the fourth configuration information independently based on each HARQ process number or configure the fourth configuration information based on a set of HARQ process numbers.
In another embodiment, the first configuration information is carried in a mapping restriction parameter corresponding to the second target object.
In another embodiment, the processor 402 is further configured to perform at least one of the following operations:

allowing second target objects with same first configuration information to be multiplexed into one MAC PDU corresponding to the HARQ process; or
allowing second target objects with different first configuration information to be multiplexed into one MAC PDU corresponding to the HARQ process.

Optionally, if the second target objects with different first configuration information are allowed to be multiplexed into one MAC PDU corresponding to the HARQ process, and the length of each DRX timer is determined based on the first configuration information corresponding to the second target object included in the HARQ process, then a determining manner of the first configuration information includes any one of:

the first configuration information corresponding to the second target object with a highest priority in the MAC PDU corresponding to the HARQ process;

the first configuration information corresponding to the second target object with a lowest priority in the MAC PDU corresponding to the HARQ process;

the first configuration information corresponding to a specified second target object in the MAC PDU corresponding to the HARQ process; and

determining the first configuration information corresponding to each second target object in the MAC PDU corresponding to the HARQ process, and determining the first configuration information based on a number of second target objects configured with the same first configuration information.

In another embodiment, the processor 402 is further configured to carry, if the resource is a pre-configured resource, the second configuration information in configuration information or a pre-configured resource activation signaling corresponding to the pre-configured resource.

In another embodiment, the processor 402 is further configured to determine a DRX active time of the resource used for the transmission of the HARQ process; and determine the second configuration information according to the DRX configuration parameter to which the DRX active time belongs.

Optionally, if the DRX active time is an intersection of active times of multiple DRX configurations corresponding to the resource, the processor 402 is further configured to determine the second configuration information by adopting any one of the following manners:

determining the second configuration information according to one DRX configuration randomly selected from the multiple DRX configurations; and

sorting the multiple DRX configurations, and determining the second configuration information according to a first DRX configuration after sorting.

In another embodiment, the processor 402 is further configured to determine at least one of: the first configuration information, the second configuration information, the third configuration information, or the fourth configuration information: and

the processor 402 is further configured to acquire at least one of the following contents from pre-configured information: the first configuration information, the second configuration information, the third configuration information, or the fourth configuration information.

It should be noted herein that the network device according to the embodiment of the present application can implement all the method steps implemented in the method embodiment on the network device side, and can achieve the same technical effects, and the same parts and beneficial effects of the embodiment as those of the method embodiment are not repeated herein.

Based on the same inventive concept, a DRX timer maintenance apparatus is further provided in an embodiment of the present application, for implementing the above DRX timer maintenance method.

In an embodiment, it is provided a DRX timer maintenance apparatus, which is applied to a first device. As shown in FIG. 7, the DRX timer maintenance apparatus includes:

a determining unit, which is configured to determine, in a case where there are multiple DRX configurations for a first target object, a length of each DRX timer corresponding to an HARQ process based on a preset rule.

Optionally, the first target object includes at least one of:

the first device;
a serving cell:
a serving frequency point:
a bandwidth part (BWP);
a master cell group (MCG);
a secondary cell group (SCG);
a BWP set; or
a serving frequency point set.

Optionally, the DRX timer includes at least one of:

a DRX inactivity timer:
an HARQ round-trip time timer; or
an HARQ retransmission timer.

On the basis of the above embodiment, in another embodiment, the preset rule includes at least one of the following rules:

the length of each DRX timer is determined based on first configuration information corresponding to a second target object included in the HARQ process; where the second target object includes a data radio bearer (DRB) or a signaling radio bearer (SRB) or a logic channel (LCH);

the length of each DRX timer corresponding to the HARQ process is determined based on second configuration information corresponding to a resource used for transmission of the HARQ process;

the length of each DRX timer corresponding to the HARQ process is determined based on third configuration information carried in a scheduling signaling; or

the length of each DRX timer corresponding to the HARQ process is determined based on fourth configuration information corresponding to a process number of the HARQ process.

Optionally, the scheduling signaling includes downlink control information (DCI) and/or sidelink control information (SCI).

Optionally, the first device is a network device, and the apparatus may further include:

a first information configuring unit, configured to configure the fourth configuration information independently based on each HARQ process number or configure the fourth configuration information based on a set of HARQ process numbers.

In another embodiment, on the basis of the above embodiments, at least one of the first configuration information, the second configuration information, the third configuration information, or the fourth configuration information includes one or more of:

a DRX configuration parameter; and
a DRX configuration number.

The DRX configuration parameter may include all of or a part of parameters corresponding to the DRX configuration.

Optionally, the part of DRX configuration parameters include at least one of:

a length of the DRX inactivity timer;
a length of the HARQ round-trip time timer: or
a length of the HARQ retransmission timer.

Another embodiment provides another DRX timer maintenance apparatus, and on the basis of the above embodiments, the apparatus may further include at least one of:

a first receiving unit, configured to receive at least one of the following contents sent by a network device through a dedicated signaling: the first configuration information, the second configuration information, or the fourth configuration information:

a second receiving unit, configured to receive at least one of the following contents sent by the network device through a system information block: the first configuration information, the second configuration information, or the fourth configuration information; and

a first acquiring unit, configured to acquire at least one of the following contents from pre-configured information: the first configuration information, the second configuration information, or the fourth configuration information.

In another embodiment, on the basis of the above embodiments, the first configuration information is carried in a mapping restriction parameter corresponding to the second target object.

Another embodiment provides another DRX timer maintenance apparatus, and on the basis of the above embodiments, the apparatus may further include at least one of:

a first multiplexing unit, configured to allow second target objects with same first configuration information to be multiplexed into one MAC PDU corresponding to the HARQ process; or

a second multiplexing unit, configured to allow second target objects with different first configuration information to be multiplexed into one MAC PDU corresponding to the HARQ process.

Optionally, if the second target objects with different first configuration information are allowed to be multiplexed into one MAC PDU corresponding to the HARQ process, and the length of each DRX timer is determined based on the first configuration information corresponding to the second target object included in the HARQ process, then a determining manner of the first configuration information includes any one of:

the first configuration information corresponding to the second target object with a highest priority in the MAC PDU corresponding to the HARQ process;

the first configuration information corresponding to the second target object with a lowest priority in the MAC PDU corresponding to the HARQ process;

the first configuration information corresponding to a specified second target object in the MAC PDU corresponding to the HARQ process; and

determining the first configuration information corresponding to each second target object in the MAC PDU corresponding to the HARQ process, and determining the first configuration information based on a number of second target objects configured with the same first configuration information.

Another embodiment provides another DRX timer maintenance apparatus, and on the basis of the above embodiments, the apparatus may further include:

a second information configuring unit, which is configured to carry, if the resource is a pre-configured resource, the second configuration information in configuration information or a pre-configured resource activation signaling corresponding to the pre-configured resource.

Another embodiment provides another DRX timer maintenance apparatus, and on the basis of the above embodiments, the apparatus may further include:

an active time determining unit, configured to determine a DRX active time of the resource used for the transmission of the HARQ process; and

a first information determining unit, configured to determine the second configuration information according to the DRX configuration parameter to which the DRX active time belongs.

Optionally, if the DRX active time is an intersection of active times of multiple DRX configurations corresponding to the resource, the first information determining unit is further configured to determine the second configuration information by adopting any one of the following manners:

determining the second configuration information according to one DRX configuration randomly selected from the multiple DRX configurations; and

sorting the multiple DRX configurations, and determining the second configuration information according to a first DRX configuration after sorting.

Another embodiment provides another DRX timer maintenance apparatus, where the first device is a sending terminal. On the basis of the above embodiments, the apparatus may further include:

a second target object determining unit, configured to select a second target object that is allowed to use an uplink grant according to a first condition, where the first condition at least includes the following content: the first configuration information corresponding to the second target object includes a DRX configuration parameter or a DRX configuration number corresponding to the uplink grant.

Another embodiment provides another DRX timer maintenance apparatus, where the first device is the sending terminal. On the basis of the above embodiments, the apparatus may further include:

an address selecting unit, configured to select a second target object and/or an MAC control element (CE) that is allowed to use a sidelink grant according to a second condition, and select a layer two (L2) address corresponding to the second target object and/or the MAC CE with a highest priority as a target L2 address according to a priority of the second target object and/or a priority of the MAC CE.

The second condition at least includes the following content: the first configuration information corresponding to the second target object includes a DRX configuration parameter or a DRX configuration number corresponding to the sidelink grant.

Optionally, the apparatus may further include:

an object selecting unit, configured to select a second target object satisfying a third condition for the target L2 address.

The third condition at least includes the following content: the second target object belongs to the target L2 address, and the first configuration information corresponding to the second target object includes the DRX configuration parameter or the DRX configuration number corresponding to the sidelink grant.

Another embodiment provides another DRX timer maintenance apparatus, where the first device is a sending terminal. On the basis of the above embodiments, the apparatus may further include:

a sending unit, configured to send auxiliary information to a network device, the auxiliary information being configured for instructing the network device to configure multiple DRX configurations for the sending terminal.

The auxiliary information includes at least one of:

an arrival time of a third target object;
a cycle of the third target object;
jitter of the third target object; or
a data transmission end time of the third target object.

Optionally, the third target object includes at least one of:

a QoS flow;
a data burst;
a PDU set; or
a PDU.

Another embodiment provides another DRX timer maintenance apparatus, where the first device is a network device. On the basis of the above embodiments, the apparatus may further include at least one of:

a second information determining unit, configured to determine at least one of: the first configuration information, the second configuration information, the third configuration information, or the fourth configuration information: or
a second acquiring unit, configured to acquire at least one of the following contents from pre-configured information: the first configuration information, the second configuration information, the third configuration information, or the fourth configuration information.

It should be noted that the division of the units in the embodiment of the present application is schematic, and is only logical function division, and there may be another division manner in actual implementation. In addition, functional units in the embodiments of the present application may be integrated into one processing unit, or each of the units may exist alone physically, or two or more units are integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor to perform all or a part of steps of the method described in the embodiment of the present application.

It should be noted herein that the apparatus according to the embodiment of the present invention can implement all the method steps implemented in the method embodiment, and can achieve the same technical effects, and the same parts and beneficial effects of this embodiment as those of the method embodiment are not repeated herein.

An embodiment further provides a processor-readable storage medium storing a program for causing a processor to perform the above method. The processor-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

An embodiment further provides a computer program product including a computer program which, when executed by a processor, implements the above method. The computer program product includes one or more computer instructions. Part or all of the above method can be completely or partially implemented according to the processes or functions described according to the embodiments of the present disclosure when the computer instructions are loaded and executed on a computer.

Those skilled in the art may understand that the present application may be embodied by a method, a system or a computer program product. Therefore, the present application may be embodied completely by hardware, software or by a combination of software and hardware. In addition, the present application may be embodied by a computer program product implemented in one or more computer available storage media including computer available program codes (including but not limited to a disk memory, an optical memory, etc.).

Obviously, those skilled in the art can make various modifications and variations to the present application without departing from the spirit and scope of the present application. Thus, if these modifications and variations of the present application fall within the scope of the claims of the present application and equivalents thereof, the present application also intends to include these modifications and variations.

**Claims**

1. A discontinuous reception, DRX, timer maintenance method, applied to a first device, **characterized by** comprising:
if there are a plurality of DRX configurations for a first target object, determining, based on a preset rule, a length of each DRX timer corresponding to a hybrid automatic repeat request, HARQ, process.

2. The DRX timer maintenance method according to claim 1, wherein the first target object comprises at least one of:

   the first device;
   a serving cell;
   a serving frequency point;
   a bandwidth part, BWP;
   a master cell group, MCG;
   a secondary cell group, SCG;
   a BWP set; or
   a serving frequency point set.

3. The DRX timer maintenance method according to claim 1 or 2, wherein the DRX timer comprises at least one of:

   a DRX inactivity timer;
   an HARQ round-trip time timer; or
   an HARQ retransmission timer.

4. The DRX timer maintenance method according to claim 1, wherein the preset rule comprises at least one of:

   the length of each DRX timer is determined based on first configuration information corresponding to a second target object comprised in the HARQ process, wherein the second target object comprises a data radio bearer, DRB, or a signaling radio bearer, SRB, or a logic channel, LCH;
   the length of each DRX timer corresponding to the HARQ process is determined based on second configuration information corresponding to a resource used for transmission of the HARQ process;
   the length of each DRX timer corresponding to the HARQ process is determined based on third configuration information carried in a scheduling signaling; or
   the length of each DRX timer corresponding to the HARQ process is determined based on fourth configuration information corresponding to a process number of the HARQ process.

5. The DRX timer maintenance method according to claim 4, wherein at least one of the first configuration information, the second configuration information, the third configuration information, or the fourth configuration information comprises one or more of:

   a DRX configuration parameter; and
   a DRX configuration number;
   wherein the DRX configuration parameter comprises all of or a part of parameters corresponding to a DRX configuration.

6. The DRX timer maintenance method according to claim 5, wherein the part of DRX configuration parameters comprise at least one of:

   a length of a DRX inactivity timer;
   a length of an HARQ round-trip time timer; or
   a length of an HARQ retransmission timer.

7. The DRX timer maintenance method according to claim 5, further comprising at least one of:

   receiving at least one of following contents sent by a network device through a dedicated signaling: the first configuration information, the second configuration information, or the fourth configuration information;
   receiving at least one of following contents sent by the network device through a system information block: the first configuration information, the second configuration information, or the fourth configuration information; or
   acquiring at least one of following contents from pre-configured information: the first configuration information, the second configuration information, or the fourth configuration information.

8. The DRX timer maintenance method according to claim 4, wherein the first configuration information is carried in a mapping restriction parameter corresponding to the second target object.

9. The DRX timer maintenance method according to claim 4, further comprising any one of:

   allowing second target objects with same first configuration information to be multiplexed into one media access control, MAC, packet data unit, PDU, corresponding to the HARQ process; and
   allowing second target objects with different first configuration information to be multiplexed into one MAC PDU corresponding to the HARQ process.

10. The DRX timer maintenance method according to claim 9, wherein if the second target objects with different first configuration information are allowed to be multiplexed into one MAC PDU corresponding to the HARQ process, and the length of each DRX timer is determined based on the first configuration information corresponding to the second target object comprised in the HARQ process, a determining manner of the first configuration information comprises any one of:

    the first configuration information corresponding to the second target object with a highest priority in the MAC PDU corresponding to the HARQ process;
    the first configuration information corresponding to the second target object with a lowest priority in the MAC PDU corresponding to the HARQ process;
    the first configuration information corresponding to a specified second target object in the MAC PDU corresponding to the HARQ process; and
    determining the first configuration information corresponding to each second target object in the MAC PDU corresponding to the HARQ process, and determining the first configuration information based on a number of second target objects configured with the same first configuration information.

11. The DRX timer maintenance method according to claim 4, further comprising:
    if the resource is a pre-configured resource, carrying the second configuration information in configuration information or a pre-configured resource activation signaling corresponding to the pre-configured resource.

12. The DRX timer maintenance method according to claim 4, further comprising:

    determining a DRX active time of the resource used for the transmission of the HARQ process; and
    determining the second configuration information according to a DRX configuration parameter to which the DRX active time belongs.

13. The DRX timer maintenance method according to claim 12, wherein determining the second configuration information according to the DRX configuration parameter to which the DRX active time belongs comprises:
    if the DRX active time is an intersection of active times of a plurality of DRX configurations corresponding to the resource, determining the second configuration information by adopting any one of following manners:

    determining the second configuration information according to one DRX configuration randomly selected from the plurality of DRX configurations; and
    sorting the plurality of DRX configurations, and determining the second configuration information according to a first DRX configuration after sorting.

14. The DRX timer maintenance method according to claim 4, wherein the scheduling signaling comprises downlink control information, DCI, and/or sidelink control information, SCI.

15. The DRX timer maintenance method according to claim 4, wherein the first device is a network device, and the DRX timer maintenance method further comprises:
    configuring the fourth configuration information independently based on each HARQ process number or configuring the fourth configuration information based on a set of HARQ process numbers.

16. The DRX timer maintenance method according to claim 1, wherein the first device is a sending terminal, and the DRX timer maintenance method further comprises:

selecting a second target object that is allowed to use an uplink grant according to a first condition, wherein the first condition at least comprises following content: first configuration information corresponding to the second target object comprises a DRX configuration parameter or a DRX configuration number corresponding to the uplink grant.

17. The DRX timer maintenance method according to claim 1, wherein the first device is a sending terminal, and the DRX timer maintenance method further comprises:

selecting a second target object and/or an MAC control element, CE, that is allowed to use a sidelink grant according to a second condition, and selecting a layer two, L2, address corresponding to the second target object and/or the MAC CE with a highest priority as a target L2 address according to a priority of the second target object and/or a priority of the MAC CE;
wherein the second condition at least comprises following content: first configuration information corresponding to the second target object comprises a DRX configuration parameter or a DRX configuration number corresponding to the sidelink grant.

18. The DRX timer maintenance method according to claim 17, further comprising:

selecting a second target object satisfying a third condition for the target L2 address;
wherein the third condition at least comprises following content: the second target object belongs to the target L2 address, and the first configuration information corresponding to the second target object comprises the DRX configuration parameter or the DRX configuration number corresponding to the sidelink grant.

19. The DRX timer maintenance method according to claim 16, further comprising:

sending auxiliary information to a network device, the auxiliary information being configured for instructing the network device to configure a plurality of DRX configurations for the sending terminal;
wherein the auxiliary information comprises at least one of:

an arrival time of a third target object;
a cycle of the third target object;
jitter of the third target object; or
a data transmission end time of the third target object.

20. The DRX timer maintenance method according to claim 19, wherein the third target object comprises at least one of:

a quality of service, QoS, flow;
a data burst;
a PDU set; or
a PDU.

21. The DRX timer maintenance method according to claim 4, wherein the first device is a network device, and the DRX timer maintenance method further comprises at least one of:

determining at least one of: the first configuration information, the second configuration information, the third configuration information, or the fourth configuration information; or
acquiring at least one of following contents from pre-configured information: the first configuration information, the second configuration information, the third configuration information, or the fourth configuration information.

22. A device, **characterized by** comprising a memory, a transceiver and a processor;
the memory is configured to store a computer program; the transceiver is configured to transceive data under control of the processor; and the processor is configured to read the computer program stored in the memory and perform:
if there are a plurality of discontinuous reception, DRX, configurations for a first target object, determining, based on a preset rule, a length of each DRX timer corresponding to a hybrid automatic repeat request, HARQ, process.

23. The device according to claim 22, wherein the first target object comprises at least one of:

a first device;
a serving cell;

a serving frequency point;
a bandwidth part, BWP;
a master cell group, MCG;
a secondary cell group, SCG;
a BWP set; or
a serving frequency point set.

24. The device according to claim 22 or 23, wherein the DRX timer comprises at least one of:

a DRX inactivity timer;
an HARQ round-trip time timer; or
an HARQ retransmission timer.

25. The device according to claim 22, wherein the preset rule comprises at least one of:

the length of each DRX timer is determined based on first configuration information corresponding to a second target object comprised in the HARQ process, wherein the second target object comprises a data radio bearer, DRB, or a signaling radio bearer, SRB, or a logic channel, LCH;
the length of each DRX timer corresponding to the HARQ process is determined based on second configuration information corresponding to a resource used for transmission of the HARQ process;
the length of each DRX timer corresponding to the HARQ process is determined based on third configuration information carried in a scheduling signaling; or
the length of each DRX timer corresponding to the HARQ process is determined based on fourth configuration information corresponding to a process number of the HARQ process.

26. The device according to claim 25, wherein at least one of the first configuration information, the second configuration information, the third configuration information, or the fourth configuration information comprises one or more of:

a DRX configuration parameter; and
a DRX configuration number;

wherein the DRX configuration parameter comprises all of or a part of parameters corresponding to a DRX configuration.

27. The device according to claim 26, wherein the part of DRX configuration parameters comprise at least one of:

a length of a DRX inactivity timer;
a length of an HARQ round-trip time timer; or
a length of an HARQ retransmission timer.

28. The device according to claim 26,

wherein the transceiver is configured to receive at least one of following contents sent by a network device through a dedicated signaling: the first configuration information, the second configuration information, or the fourth configuration information;
the transceiver is further configured to receive at least one of following contents sent by the network device through a system information block: the first configuration information, the second configuration information, or the fourth configuration information; and
the processor is further configured to acquire at least one of following contents from pre-configured information: the first configuration information, the second configuration information, or the fourth configuration information.

29. The device according to claim 25, wherein the first configuration information is carried in a mapping restriction parameter corresponding to the second target object.

30. The device according to claim 25, wherein the processor is further configured to perform at least one of:

allowing second target objects with same first configuration information to be multiplexed into one media access control, MAC, packet data unit, PDU, corresponding to the HARQ process; or

allowing second target objects with different first configuration information to be multiplexed into one MAC PDU corresponding to the HARQ process.

31. The device according to claim 30, wherein if the second target objects with different first configuration information are allowed to be multiplexed into one MAC PDU corresponding to the HARQ process, and the length of each DRX timer is determined based on the first configuration information corresponding to the second target object comprised in the HARQ process, a determining manner of the first configuration information comprises any one of:

the first configuration information corresponding to the second target object with a highest priority in the MAC PDU corresponding to the HARQ process;
the first configuration information corresponding to the second target object with a lowest priority in the MAC PDU corresponding to the HARQ process;
the first configuration information corresponding to a specified second target object in the MAC PDU corresponding to the HARQ process; and
determining the first configuration information corresponding to each second target object in the MAC PDU corresponding to the HARQ process, and determining the first configuration information based on a number of second target objects configured with the same first configuration information.

32. The device according to claim 25, wherein the processor is further configured to carry, if the resource is a pre-configured resource, the second configuration information in configuration information or a pre-configured resource activation signaling corresponding to the pre-configured resource.

33. The device according to claim 25, wherein the processor is further configured to determine a DRX active time of the resource used for the transmission of the HARQ process, and determine the second configuration information according to a DRX configuration parameter to which the DRX active time belongs.

34. The device according to claim 33, wherein the processor is further configured to determine, if the DRX active time is an intersection of active times of a plurality of DRX configurations corresponding to the resource, the second configuration information by adopting any one of following manners:

determining the second configuration information according to one DRX configuration randomly selected from the plurality of DRX configurations; and
sorting the plurality of DRX configurations, and determining the second configuration information according to a first DRX configuration after sorting.

35. The device according to claim 25, wherein the scheduling signaling comprises downlink control information, DCI, and/or sidelink control information, SCI.

36. The device according to claim 25, wherein the device is a network device, and the processor is further configured to configure the fourth configuration information independently based on each HARQ process number or configure the fourth configuration information based on a set of HARQ process numbers.

37. The device according to claim 22, wherein the device is a sending terminal, and the processor is further configured to select a second target object that is allowed to use an uplink grant according to a first condition, wherein the first condition at least comprises following content: first configuration information corresponding to the second target object comprises a DRX configuration parameter or a DRX configuration number corresponding to the uplink grant.

38. The device according to claim 22, wherein the device is a sending terminal, and the processor is further configured to select a second target object and/or an MAC control element, CE, that is allowed to use a sidelink grant according to a second condition, and select a layer two, L2, address corresponding to the second target object and/or the MAC CE with a highest priority as a target L2 address according to a priority of the second target object and/or a priority of the MAC CE;
wherein the second condition at least comprises following content: first configuration information corresponding to the second target object comprises a DRX configuration parameter or a DRX configuration number corresponding to the sidelink grant.

39. The device according to claim 38,
wherein the processor is further configured to select a second target object satisfying a third condition for the target L2 address; wherein the third condition at least comprises following content: the second target object belongs to the target L2 address, and the first configuration information corresponding to the second target object comprises the DRX configuration parameter or the DRX configuration number corresponding to the sidelink grant.

40. The device according to claim 37,

wherein the processor is further configured to send auxiliary information to a network device, the auxiliary information being configured for instructing the network device to configure a plurality of DRX configurations for the sending terminal;
wherein the auxiliary information comprises at least one of:

an arrival time of a third target object;
a cycle of the third target object;
jitter of the third target object; or
a data transmission end time of the third target object.

41. The device according to claim 40, wherein the third target object comprises at least one of:

a quality of service, QoS, flow;
a data burst;
a PDU set; or
a PDU.

42. The device according to claim 25, wherein the device is a network device,

the processor is further configured to determine at least one of: the first configuration information, the second configuration information, the third configuration information, or the fourth configuration information; and
the processor is further configured to acquire at least one of following contents from pre-configured information: the first configuration information, the second configuration information, the third configuration information, or the fourth configuration information.

43. A discontinuous reception, DRX, timer maintenance apparatus, **characterized by** comprising:
a determining unit, which is configured to determine, if there are a plurality of DRX configurations for a first target object, a length of each DRX timer corresponding to a hybrid automatic repeat request, HARQ, process based on a preset rule.

44. A processor-readable storage medium, which stores a program thereon, **characterized in that** the program is configured for causing a processor to perform the DRX timer maintenance method according to any one of claims 1 to 21.

core network

network
side
device

Uu interface

Uu interface

UE1

UE2

**FIG. 1**

UE continuously
monitors control
channel

on duration

DRX sleep duration

DRX cycle

**FIG. 2**

if there are multiple sets of DRX configurations for a first target object,
determine, based on a preset rule, the length of each DRX timer
corresponding to an HARQ process

S102

**FIG. 3**

determining a DRX active time of the resource used for the transmission of the HARQ process —— S202

determining the second configuration information according to the DRX configuration parameter to which the DRX active time belongs —— S204

**FIG. 4**

processor —302

bus interface

transceiver —306

memory —304

user interface —308

**FIG. 5**

processor —402

bus interface

transceiver —406

memory —404

**FIG. 6**

determining unit

DRX timer maintenance apparatus

**FIG. 7**

## INTERNATIONAL SEARCH REPORT

| International application No. |
|---|
| **PCT/CN2024/110755** |

### A. CLASSIFICATION OF SUBJECT MATTER

H04W76/28(2018.01)i

According to International Patent Classification (IPC) or to both national classification and IPC

### B. FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI, WPABS: 定时器, 多, 每, 套, 个, 配置, drx, timer, pluralit+, multi+, harq, xr, configur+

### C. DOCUMENTS CONSIDERED TO BE RELEVANT

| Category* | Citation of document, with indication, where appropriate, of the relevant passages | Relevant to claim No. |
|---|---|---|
| X | WO 2023044797 A1 (APPLE INC.) 30 March 2023 (2023-03-30)<br>description, page 6 paragraph 3-page 24 paragraph 1, and page 48 paragraph 3 | 1-44 |
| X | CN 111050423 A (VIVO COMMUNICATION TECHNOLOGY CO., LTD.) 21 April 2020 (2020-04-21)<br>description, paragraphs [0028]-[0059] | 1-44 |
| X | CN 111107615 A (VIVO COMMUNICATION TECHNOLOGY CO., LTD.) 05 May 2020 (2020-05-05)<br>description, paragraphs [0039]-[0115] | 1-44 |
| A | CN 111699723 A (BEIJING XIAOMI MOBILE SOFTWARE CO., LTD.) 22 September 2020 (2020-09-22)<br>entire document | 1-44 |
| A | CN 115767440 A (DATANG MOBILE COMMUNICATIONS EQUIPMENT CO., LTD.) 07 March 2023 (2023-03-07)<br>entire document | 1-44 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2024** | **23 October 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/110755** |

| C. | DOCUMENTS CONSIDERED TO BE RELEVANT | |
|---|---|---|
| Category* | Citation of document, with indication, where appropriate, of the relevant passages | Relevant to claim No. |
| A | LENOVO. "R2-2209938, Discussion of DRX enhancement" *3GPP TSG-RAN WG2 Meeting #119bis electronic Online,* 19 October 2022 (2022-10-19), entire document | 1-44 |

Form PCT/ISA/210 (second sheet) (July 2022)

## INTERNATIONAL SEARCH REPORT
### Information on patent family members

International application No.

**PCT/CN2024/110755**

| Patent document cited in search report | | | Publication date (day/month/year) | Patent family member(s) | | | Publication date (day/month/year) |
|---|---|---|---|---|---|---|---|
| WO | 2023044797 | A1 | 30 March 2023 | US | 2024224376 | A1 | 04 July 2024 |
| | | | | CN | 116210345 | A | 02 June 2023 |
| CN | 111050423 | A | 21 April 2020 | | None | | |
| CN | 111107615 | A | 05 May 2020 | | None | | |
| CN | 111699723 | A | 22 September 2020 | WO | 2021159404 | A1 | 19 August 2021 |
| | | | | EP | 4106416 | A1 | 21 December 2022 |
| | | | | US | 2023068554 | A1 | 02 March 2023 |
| CN | 115767440 | A | 07 March 2023 | WO | 2023030247 | A1 | 09 March 2023 |
| | | | | EP | 4398650 | A1 | 10 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112028172